# EUROPEAN PATENT APPLICATION

(11) **EP 4 415 079 A1**
(43) Date of publication of application: **14.08.2024**
(21) Application number: 23882529.3
(22) Date of filing: 19.10.2023
(51) Int. Cl.: H01M 4/62, C08F 214/22, H01M 4/131, H01M 10/054

(54) **BINDER FOR POSITIVE ELECTRODES, ELECTRODE MIXTURE, ELECTRODE AND SECONDARY BATTERY**

(30) Priority: 28.10.2022 JP 2022173819
(71) Applicant: Daikin Industries, Ltd., Osaka 530-0001 (JP)
(72) Inventor: OGURA, Akiho, Osaka 5300001 (JP); YAMAZAKI, Shigeaki, Osaka 5300001 (JP); ICHINOSE, Yuma, Osaka 5300001 (JP); TERADA, Junpei, Osaka 5300001 (JP); FUJIWARA, Kae, Osaka 5300001 (JP)
(74) Representative: Hoffmann Eitle
(86) International application number: PCT/JP2023/037858
(87) International publication number: WO 2024/090324

(57) **Abstract**

Provided are a binder that lowers interfacial resistance between a current collector and an electrode material layer in a positive electrode of a sodium ion battery and has good battery characteristics, as well as an electrode mixture, an electrode, and a secondary battery using the binder. A binder for a positive electrode of a sodium ion battery, including a copolymer that has a vinylidene fluoride unit (A) and a constituent unit (B) derived from at least one monomer selected from the group consisting of trifluoroethylene, hexafluoropropylene, chlorotrifluoroethylene, a monomer represented by formula (1), a monomer represented by formula (2), and a monomer represented by formula (3), and that is free of a tetrafluoroethylene unit: 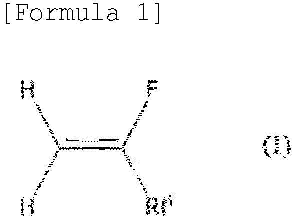 wherein Rf¹ is a linear or branched fluorinated alkyl group or fluorinated alkoxy group having from 1 to 12 carbon atoms, and the fluorinated alkyl group and the fluorinated alkoxy group optionally contain an oxygen atom (-O-) between carbon-carbon atoms in the case of having 2 or more carbon atoms, 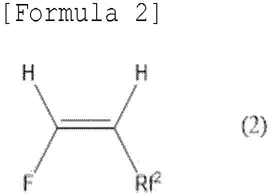 wherein Rf² is a linear or branched fluorinated alkyl group or fluorinated alkoxy group having from 1 to 12 carbon atoms, and the fluorinated alkyl group and the fluorinated alkoxy group optionally contain an oxygen atom (-O-) between carbon-carbon atoms in the case of having 2 or more carbon atoms, and 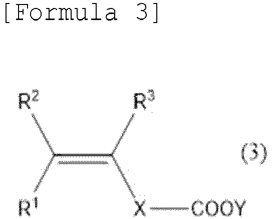 wherein R¹, R², and R³ are each independently a hydrogen atom, a chlorine atom or an alkyl group having from 1 to 5 carbon atoms; X is a single bond or an atomic group having a main chain composed of from 1 to 20 atoms and having a molecular weight of 500 or less; and Y represents an inorganic cation and/or an organic cation.

## Description

### Technical Field

The present invention relates to a binder for a positive electrode, an electrode mixture, an electrode, and a secondary battery.

### Background Art

As electrical products have become lighter and smaller in recent years, demand for electrochemical devices such as secondary batteries has rapidly increased. Further, with the increasing performance of electrical products and the provision of functions not seen in the past, there is a growing need for electrochemical devices that can withstand use under harsh conditions for longer periods of time.

Research is being conducted on sodium ion secondary batteries that use sodium ions as charge carriers. Sodium is more abundant than lithium and can be obtained more cheaply, and so sodium is drawing attention for use in secondary batteries that can be made larger at a lower cost. Patent Literature 1 and 2 describe sodium ion batteries that use a fluorine compound as a binder.

### Citation List

### Patent Literature

Patent Literature 1: Japanese Patent Laid-Open No. 2012-79687
Patent Literature 2: Japanese Patent Laid-Open No. 2014-26818

### Summary of Invention

### Technical Problem

It is an object of the present disclosure to provide a binder that lowers interfacial resistance between a current collector and an electrode material layer in a positive electrode of a sodium ion battery and has good battery characteristics, as well as to provide an electrode mixture, an electrode, and a secondary battery using the binder.

### Solution to Problem

The present disclosure provides a binder for a positive electrode of a sodium ion battery, including a copolymer that has a vinylidene fluoride unit (A) and a constituent unit (B) derived from at least one monomer selected from the group consisting of trifluoroethylene, chlorotrifluoroethylene, a monomer represented by the following formula (1), a monomer represented by the following formula (2), and a monomer represented by the following formula (3), and that is free of a tetrafluoroethylene unit: 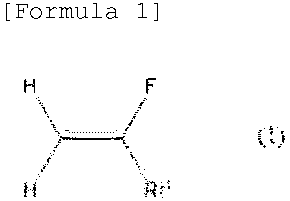 wherein Rf¹ is a linear or branched fluorinated alkyl group or fluorinated alkoxy group having from 1 to 12 carbon atoms, and the fluorinated alkyl group and the fluorinated alkoxy group optionally contain an oxygen atom (-O-) between carbon-carbon atoms in the case of having 2 or more carbon atoms, 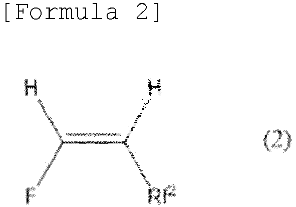 wherein Rf² is a linear or branched fluorinated alkyl group or fluorinated alkoxy group having from 1 to 12 carbon atoms, and the fluorinated alkyl group and the fluorinated alkoxy group optionally contain an oxygen atom (-O-) between carbon-carbon atoms in the case of having 2 or more carbon atoms, and 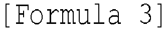 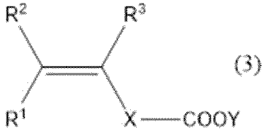 wherein R¹, R², and R³ are each independently a hydrogen atom, a chlorine atom or an alkyl group having from 1 to 5 carbon atoms; X is a single bond or an atomic group having a main chain composed of from 1 to 20 atoms and having a molecular weight of 500 or less; and Y represents an inorganic cation and/or an organic cation.

It is preferred that a content of the vinylidene fluoride unit (A) with respect to all monomer units in the copolymer is from 90 to 99.5 mol%.

It is preferred that the constituent unit (B) is a constituent unit derived from at least one monomer selected from the group consisting of trifluoroethylene, hexafluoropropylene, chlorotrifluoroethylene, 2,3,3,3-tetrafluoropropene, perfluoro-(2,9,9-trihaloid-5-trifluoromethyl-3,6-dioxa-8-heptene), and acrylic acid.

Further, it is preferred that the constituent unit (B) is a constituent unit derived from 2,3,3,3-tetrafluoropropene.

It is preferred that the binder for a positive electrode includes two or more types of the copolymer.

It is preferred that the binder for a positive electrode further includes a fluorine-containing polymer other than the copolymer.

It is preferred that the fluorine-containing polymer is polyvinylidene fluoride or modified polyvinylidene fluoride.

The present disclosure provides an electrode mixture comprising an electrode active material containing a sodium composite oxide, and the above-described binder for a positive electrode of a sodium ion battery

The present disclosure provides an electrode comprising a current collector and an electrode material layer formed from the above-described electrode mixture provided on one side or both sides of the current collector.

The present disclosure provides a sodium ion secondary battery comprising the above-described electrode.

### Advantageous Effects of Invention

The present disclosure provides a binder that lowers interfacial resistance between a current collector and an electrode material layer in a positive electrode of a sodium ion battery and has good battery characteristics. In addition, an electrode and secondary battery that use the binder of the present disclosure have a reduced interfacial resistance between the current collector and the electrode material layer in the positive electrode. Moreover, a secondary battery that uses the binder of the present disclosure has good battery characteristics.

### Description of Embodiments

The present disclosure will now be described in detail below.

The present disclosure provides a binder used to form the positive electrode of a sodium ion battery.

In recent years, development of sodium ion batteries (SIBs) has progressed. Since sodium ions have a larger ionic radius than lithium ions, there is greater expansion and contraction in the interlayer distance in the positive electrode active material and structural change due to charging and discharging in SIBs than in lithium ion batteries (LiBs). In the electrode material layer (excluding the interface with the current collector foil), it is possible to maintain a conductive path regardless of shrinkage due to the binder, but at the interface with the current collector foil, the binder is not present between the active material and the current collector foil, and thus it is more difficult to maintain a conductive path than in the electrode material layer (excluding the interface with the current collector foil). Therefore, in SIBs, lower interfacial resistance is required during electrode production.

The present inventors discovered that by using a binder that includes a vinylidene fluoride-containing copolymer having a specific composition and that does not include a constituent unit derived from tetrafluoroethylene as a binder component during electrode production in an SIB, which unlike an LiB requires an electrode with lower interfacial resistance, the conductive agent can be more closely bonded to the current collector during electrode pressing, and the interfacial resistance value between the current collector (for example, Al) and the electrode material layer (conductive agent/Na active material/binder) in the electrode can be reduced.

Further, by using the binder of the present disclosure, the battery performance of a sodium ion battery is also improved.

The binder for a positive electrode of a sodium ion battery according to the present disclosure includes a copolymer that has a vinylidene fluoride (VdF) unit (A) and a constituent unit (B) derived from at least one monomer selected from the group consisting of trifluoroethylene (TrFE), hexafluoropropylene (HFP), chlorotrifluoroethylene (CTFE), a monomer represented by the following formula (1), a monomer represented by the following formula (2), and a monomer represented by the following formula (3), and that is free of a tetrafluoroethylene unit.

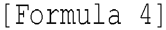

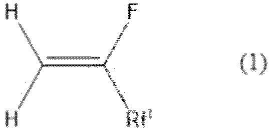

In the above formula, Rf¹ is a linear or branched fluorinated alkyl group or fluorinated alkoxy group having from 1 to 12 carbon atoms, and the fluorinated alkyl group and the fluorinated alkoxy group optionally contain an oxygen atom (-O-) between carbon-carbon atoms in the case of having 2 or more carbon atoms,

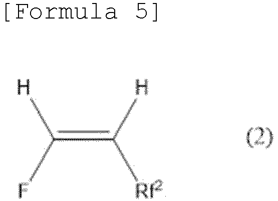

In the above formula, Rf² is a linear or branched fluorinated alkyl group or fluorinated alkoxy group having from 1 to 12 carbon atoms, and the fluorinated alkyl group and the fluorinated alkoxy group optionally contain an oxygen atom (-O-) between carbon-carbon atoms in the case of having 2 or more carbon atoms, and

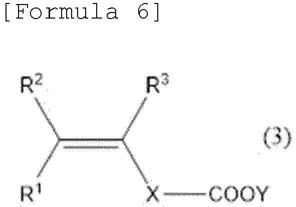

In the above formula, R¹, R², and R³ are each independently a hydrogen atom, a chlorine atom or an alkyl group having from 1 to 5 carbon atoms; X is a single bond or an atomic group having a main chain composed of from 1 to 20 atoms and having a molecular weight of 500 or less; and Y represents an inorganic cation and/or an organic cation.

In the fluorine-containing monomer represented by formula (1), Rf¹ is a linear or branched fluorinated alkyl group having from 1 to 12 carbon atoms or a linear or branched fluorinated alkoxy group having from 1 to 12 carbon atoms. The fluorinated alkyl group and the fluorinated alkoxy group may contain an oxygen atom (-O-) between carbon-carbon atoms in the case of having 2 or more carbon atoms.

The fluorinated alkyl group of Rf¹ may be a partially fluorinated alkyl group in which some of the hydrogen atoms bonded to carbon atoms are substituted with fluorine atoms, or a perfluorinated alkyl group in which all of the hydrogen atoms bonded to carbon atoms are substituted with fluorine atoms. Further, in the fluorinated alkyl group of Rf¹, the hydrogen atoms may be substituted with a substituent other than a fluorine atom, but it is preferred that the fluorinated alkyl group of Rf¹ does not contain a substituent other than a fluorine atom.

In addition, the fluorinated alkoxy group of Rf¹ may be a partially fluorinated alkoxy group in which some of the hydrogen atoms bonded to carbon atoms are substituted with fluorine atoms, or a perfluorinated alkoxy group in which all of the hydrogen atoms bonded to carbon atoms are substituted with fluorine atoms. Further, in the fluorinated alkoxy group of Rf¹, the hydrogen atoms may be substituted with a substituent other than a fluorine atom, but it is preferred that the fluorinated alkoxy group of Rf¹ does not contain a substituent other than a fluorine atom.

The number of carbon atoms of Rf¹ is preferably from 1 to 10, more preferably from 1 to 6, further preferably from 1 to 4, and particularly preferably 1.

Rf¹ is preferably a group represented by the following formula.

-(Rf₁₁)-m-(O)p-(Rf₁₂-O)n-Rf₁₃

In formula, Rf₁₁ and Rf₁₂ are independently a linear or branched chain fluorinated alkylene group having from 1 to 4 carbon atoms, Rf₁₃ is a linear or branched chain fluorinated alkyl group having from 1 to 4 carbon atoms, p is 0 or 1, m is an integer of from 0 to 4, and n is an integer of from 0 to 4.

The fluorinated alkylene group of Rf₁₁ and Rf₁₂ may be a partially fluorinated alkylene group in which some of the hydrogen atoms bonded to carbon atoms are substituted with fluorine atoms, or a perfluorinated alkylene group in which all of the hydrogen atoms bonded to carbon atoms are substituted with fluorine atoms. Further, in the fluorinated alkylene group of Rf₁₁ and Rf₁₂, the hydrogen atoms may be substituted with a substituent other than a fluorine atom, but it is preferred that the fluorinated alkylene group of Rf₁₁ and Rf₁₂ does not contain a substituent other than a fluorine atom. Each occurrence of Rf₁₁ and Rf₁₂ may be the same or different.

Examples of the fluorinated alkylene group of Rf₁₁ include -CHF-, -CF₂-, -CH₂-CF₂-, -CHF-CF₂-, -CF₂-CF₂-, - CF(CF₃) -, -CH₂-CF₂-CF₂-, -CHF-CF₂-CF₂-, -CF₂-CF₂-CF₂-, - CF(CF₃) -CF₂-, -CF₂-CF (CF₃) -, -C(CF₃) ₂-, -CH₂-CF₂-CF₂-CF₂-, - CHF-CF₂-CF₂-CF₂-, -CF₂-CF₂-CF₂-CF₂-, -CH (CF₃) -CF₂-CF₂-, - CF(CF₃) -CF₂-CF₂-, -C(CF₃)₂-CF₂-, and the like. Among these, a perfluorinated alkylene group having 1 or 2 carbon atoms is preferred, and -CF₂- is more preferred.

Examples of the fluorinated alkylene group of Rf₁₂ include -CHF-, -CF₂-, -CH₂-CF₂-, -CHF-CF₂-, -CF₂-CF₂-, - CF(CF₃) -, -CH₂-CF₂-CF₂-, -CHF-CF₂-CF₂-, -CF₂-CF₂-CF₂-, - CF(CF₃) -CF₂-, -CF₂-CF(CF₃) -, -C(CF₃) ₂-, -CH₂-CF₂-CF₂-CF₂-, - CHF-CF₂-CF₂-CF₂-, -CF₂-CF₂-CF₂-CF₂-, -CH (CF₃) -CF₂-CF₂-, - CF(CF₃) -CF₂-CF₂-, -C(CF₃)₂-CF₂-, and the like. Among these, a perfluorinated alkylene group having from 1 to 3 carbon atoms is preferred, and -CF₂-, -CF₂CF₂-, -CF₂-CF₂-CF₂-, -CF (CF₃) -CF₂-, or -CF₂-CF(CF₃) - is more preferred.

The fluorinated alkyl group of Rf₁₃ may be a partially fluorinated alkyl group in which some of the hydrogen atoms bonded to carbon atoms are substituted with fluorine atoms, or a perfluorinated alkyl group in which all of the hydrogen atoms bonded to carbon atoms are substituted with fluorine atoms. Further, in the fluorinated alkyl group of Rf₁₃, the hydrogen atoms may be substituted with a substituent other than a fluorine atom, but it is preferred that the fluorinated alkyl group of Rf₁₃ does not contain a substituent other than a fluorine atom (for example, -CN, -CH₂I, -CH₂Br, and the like).

Examples of the fluorinated alkyl group of Rf₁₃ include -CH₂F, -CHF₂, -CF₃, -CH₂-CH₂F, -CH₂-CHF₂, -CH₂-CF₃, -CHF-CH₂F, -CHF-CHF₂, -CHF-CF₃, -CF₂-CH₂F, -CF₂-CHF₂, -CF₂-CF₃, -CH₂-CF₂-CH₂F, -CHF-CF₂-CH₂F, -CF₂-CF₂-CH₂F, -CF(CF₃) - CH₂F, -CH₂-CF₂-CHF₂, -CHF-CF₂-CHF₂, -CF₂-CF₂-CHF₂, -CF(CF₃) - CHF₂, -CH₂-CF₂-CF₃, -CHF-CF₂-CF₃, -CF₂-CF₂-CF₃, -CF(CF₃)-CF₃, -CH₂-CF₂-CF₂-CF₃, -CHF-CF₂-CF₂-CF₃, -CF₂-CF₂-CF₂-CF₃, - CH(CF₃) -CF₂-CF₃, -CF (CF₃) -CF₂-CF₃, -C(CF₃)2-CF₃, and the like. Among these -CF₃, -CHF-CF₃, -CF₂-CHF₂, -CF₂-CF₃, - CF₂-CF₂-CF₃, -CF (CF₃) -CF₃, -CF₂-CF₂-CF₂-CF₃, -CH (CF₃) -CF₂-CF₃, or -CF (CF₃) -CF₂-CF₃ is preferred.

p is preferably 0.

m is preferably an integer of from 0 to 2, more preferably 0 or 1, and further preferably 0. Further, when p is 0, it is preferred that m also be 0.

n is preferably an integer of from 0 to 2, more preferably 0 or 1, and further preferably 0.

The repeating unit is preferably

-CH₂-CF[-CF₃]-,

-CH₂-CF[-CF₂CF₃]-,

-CH₂-CF[-CF₂CF₂CF₃]-,

-CH₂-CF[-CF₂CF₂CF₂CF₃]-,

-CH₂-CF[-CF₂-O-CF(CF₃)- CF₂-O-CHF-CF₃]-,

-CH₂-CF[-CF₂-O-CF(CF₃) -CF₂-O-CF₂-CF₃]-,

-CH₂-CF[-CF₂-O-CF(CF₃) -CF₂-O-CF(CF₃) -CF₃]-,

-CH₂-CF[-CF₂-O-CF(CF₃) -CF₂-O-CH(CF₃) -CF₂-CF₃]-,

-CH₂-CF[-CF₂-O-CF(CF₃) -CF₂-O-CF(CF₃) -CF₂-CF₃]-,

-CH₂-CF[-OCF₂OCF₃]-,

-CH₂-CF[-OCF₂CF₂CF₂2OCF₃]-,

-CH₂-CF[-CF₂OCFOCF₃]-,

-CH₂-CF[-CF₂OCF₂CF₂CF₂OCF₃]-, or

-CH₂-CF[-O-CF₂-CF₃]-,

and more preferably is -CH₂-CF[-CF₃]-.

Examples of the monomer represented by formula (1) include 2,3,3,3-tetrafluoropropene (1,2,3,4-yf), 2,3,3,4,4,4-hexafluoro-1-butene, perfluoro-(2,9,9-trihaloid-5-trifluoromethyl-3,6-dioxa-8-heptene) (AEHF-1), and the like. Among these, 2,3,3,3-tetrafluoropropene (1,2,3,4-yf) is preferred.

In the fluorine-containing monomer (2) represented by formula (2), Rf² is a linear or branched fluorinated alkyl group having from 1 to 12 carbon atoms or a linear or branched fluorinated alkoxy group having from 1 to 12 carbon atoms. The fluorinated alkyl group and the fluorinated alkoxy group may contain an oxygen atom (-O-) between carbon-carbon atoms in the case of having 2 or more carbon atoms.

The fluorinated alkyl group of Rf² may be a partially fluorinated alkyl group in which some of the hydrogen atoms bonded to carbon atoms are substituted with fluorine atoms, or a perfluorinated alkyl group in which all of the hydrogen atoms bonded to carbon atoms are substituted with fluorine atoms. Further, in the fluorinated alkyl group of Rf², the hydrogen atoms may be substituted with a substituent other than a fluorine atom, but it is preferred that the fluorinated alkyl group of Rf² does not contain a substituent other than a fluorine atom.

In addition, the fluorinated alkoxy group of Rf² may be a partially fluorinated alkoxy group in which some of the hydrogen atoms bonded to carbon atoms are substituted with fluorine atoms, or a perfluorinated alkoxy group in which all of the hydrogen atoms bonded to carbon atoms are substituted with fluorine atoms. Further, in the fluorinated alkoxy group of Rf², the hydrogen atoms may be substituted with a substituent other than a fluorine atom, but it is preferred that the fluorinated alkoxy group of Rf² does not contain a substituent other than a fluorine atom.

The number of carbon atoms of Rf² is preferably from 1 to 10, more preferably from 1 to 6, further preferably from 1 to 4, and particularly preferably 1.

Rf² is preferably a group represented by the following formula.

- (Rf₂₁)m-(O)p-(Rf₂₂-O)n-Rf₂₃

In formula, Rf₂₁ and Rf₂₂ are independently a linear or branched chain fluorinated alkylene group having from 1 to 4 carbon atoms, Rf₂₃ is a linear or branched chain fluorinated alkyl group having from 1 to 4 carbon atoms, p is 0 or 1, m is an integer of from 0 to 4, and n is an integer of from 0 to 4.

The fluorinated alkylene group of Rf₂₁ and Rf₂₂ may be a partially fluorinated alkylene group in which some of the hydrogen atoms bonded to carbon atoms are substituted with fluorine atoms, or a perfluorinated alkylene group in which all of the hydrogen atoms bonded to carbon atoms are substituted with fluorine atoms. Further, in the fluorinated alkylene group of Rf₂₁ and Rf₂₂, the hydrogen atoms may be substituted with a substituent other than a fluorine atom, but it is preferred that the fluorinated alkylene group of Rf₂₁ and Rf₂₂ does not contain a substituent other than a fluorine atom. Each occurrence of Rf₂₁ and Rf₂₂ may be the same or different.

Examples of the fluorinated alkylene group of Rf₂₁ include -CHF-, -CF₂-, -CH₂-CF₂-, -CHF-CF₂-, -CF₂-CF₂-, - CF(CF₃)-, -CH₂-CF₂-CF₂-, -CHF-CF₂-CF₂-, -CF₂-CF₂-CF₂-, - CF(CF₃) -CF₂-, -CF₂-CF(CF₃) -, -C(CF₃)₂-, -CH₂-CF₂-CF₂-CF₂-, - CHF-CF₂-CF₂-CF₂-, -CF₂-CF₂-CF₂-CF₂-, -CH (CF₃) -CF₂-CF₂-, - CF(CF₃) -CF₂-CF₂-, -C(CF₃) ₂-CF₂-, and the like. Among these, a perfluorinated alkylene group having 1 or 2 carbon atoms is preferred, and -CF₂- is more preferred.

Examples of the fluorinated alkylene group of Rf₂₂ include -CHF-, -CF₂-, -CH₂-CF₂-, -CHF-CF₂-, -CF₂-CF₂-, - CF(CF₃)-, -CH₂-CF₂-CF₂-, -CHF-CF₂-CF₂-, -CF₂-CF₂-CF₂-, - CF(CF₃) -CF₂-, -CF₂-CF(CF₃) -, -C(CF₃)₂-, -CH₂-CF₂-CF₂-CF₂-, - CHF-CF₂-CF₂-CF₂-, -CF₂-CF₂-CF₂-CF₂-, -CH (CF₃) -CF₂-CF₂-, - CF(CF₃) -CF₂-CF₂-, -C(CF₃) ₂-CF₂-, and the like. Among these, a perfluorinated alkylene group having from 1 to 3 carbon atoms is preferred, and -CF₂-, -CF₂CF₂-, -CF₂-CF₂-CF₂-, -CF (CF₃) -CF₂-, or -CF₂-CF(CF₃)- is more preferred.

The fluorinated alkyl group of Rf₂₃ may be a partially fluorinated alkyl group in which some of the hydrogen atoms bonded to carbon atoms are substituted with fluorine atoms, or a perfluorinated alkyl group in which all of the hydrogen atoms bonded to carbon atoms are substituted with fluorine atoms. Further, in the fluorinated alkyl group of Rf₂₃, the hydrogen atoms may be substituted with a substituent other than a fluorine atom, but it is preferred that the fluorinated alkyl group of Rf₂₃ does not contain a substituent other than a fluorine atom (for example, -CN, -CH₂I, -CH₂Br, and the like).

Examples of the fluorinated alkyl group of Rf₂₃ include -CH₂F, -CHF₂, -CF₃, -CH₂-CH₂F, -CH₂-CHF₂, -CH₂-CF₃, -CHF-CH₂F, -CHF-CHF₂, -CHF-CF₃, -CF₂-CH₂F, -CF₂-CHF₂, -CF₂-CF₃, -CH₂-CF₂-CH₂F, -CHF-CF₂-CH₂F, -CF₂-CF₂-CH₂F, -CF(CF₃) - CH₂F, -CH₂-CF₂-CHF₂, -CHF-CF₂-CHF₂, -CF₂-CF₂-CHF₂, -CF(CF₃)-CHF₂, -CH₂-CF₂-CF₃, -CHF-CF₂-CF₃, -CF₂-CF₂-CF₃, -CF(CF₃)-CF₃, -CH₂-CF₂-CF₂-CF₃, -CHF-CF₂-CF₂-CF₃, -CF₂-CF₂-CF₂-CF₃, - CH(CF₃) -CF₂-CF₃, -CF (CF₃) -CF₂-CF₃, -C(CF₃)2-CF₃, and the like. Among these -CF₃, -CHF-CF₃, -CF₂-CHF₂, -CF₂-CF₃, - CF₂-CF₂-CF₃, -CF (CF₃) -CF₃, -CF₂-CF₂-CF₂-CF₃, -CH (CF₃) -CF₂-CF₃, or -CF (CF₃) -CF₂-CF₃ is preferred.

p is preferably 0.

m is preferably an integer of from 0 to 2, more preferably 0 or 1, and further preferably 0. Further, when p is 0, it is preferred that m also be 0.

n is preferably an integer of from 0 to 2, more preferably 0 or 1, and further preferably 0.

The repeating unit is preferably

-CHF-CH[-CF₃]-,

-CHF-CH[-CF₂CF₃]-,

-CHF-CH[-CF₂CF₂CF₃]-, or

-CHF-CH[-CF₂CF₂CF₂CF₃]-,

and more preferably is -CHF-CH[-CF₃]-.

In formula (3), Y represents an inorganic cation and/or an organic cation. Examples of the inorganic cation include cations such as H, Li, Na, K, Mg, Ca, Al, and Fe. Examples of the organic cation include cations such as NH₄, NH₃R¹⁵, NH₂R¹⁵₂, NHR¹⁵₃, and NR¹⁵₄ (R¹⁵ independently represents an alkyl group having from 1 to 4 carbon atoms). Y is preferably H, Li, Na, K, Mg, Ca, Al, or NH₄, more preferably H, Li, Na, K, Mg, Al, or NH₄, further preferably H, Li, Al, or NH₄, and particularly preferably H. It is noted that, for convenience, the specific examples of the inorganic cation and the organic cation are described with symbols and valences omitted.

In formula (3), R¹ to R³ each independently represent a hydrogen atom, a chlorine atom, or an alkyl group having from 1 to 5 carbon atoms. The alkyl group is a monovalent alkyl group. The number of carbon atoms in the alkyl group is preferably 4 or less. The alkyl group is preferably a methyl group or an ethyl group. R¹ and R² are preferably independently a hydrogen atom, a methyl group, or an ethyl group, and R³ is preferably a hydrogen atom or a methyl group.

In formula (3), X is a single bond or an atomic group having a main chain composed of from 1 to 20 atoms and having a molecular weight of 500 or less. The atomic group is a divalent atomic group. The atomic group is preferably a hydrocarbon group having 4 or less carbon atoms. Examples of the hydrocarbon group include alkylene groups and alkenylene groups having the above-described number of carbon atoms. Among those, at least one selected from the group consisting of a methylene group, an ethylene group, an ethylidene group, a propylidene group, and an isopropylidene group is preferred, and a methylene group is more preferred.

Examples of the monomer represented by formula (3) include at least one selected from the group consisting of acryloyloxypropyl succinic acid and salts thereof, (meth)acrylic acid and salts thereof, vinyl acetic acid (3-butenoic acid) and salts thereof, 3-pentenoic acid and salts thereof, 4-pentenoic acid and salts thereof, 3-hexenoic acid and salts thereof, 4-heptenoic acid and salts thereof, and 5-hexenoic acid and salts thereof.

The constituent unit (B) is preferably a constituent unit derived from at least one monomer selected from the group consisting of trifluoroethylene, hexafluoropropylene, chlorotrifluoroethylene, 2,3,3,3-tetrafluoropropene, perfluoro-(2,9,9-trihaloid-5-trifluoromethyl-3,6-dioxa-8-heptene), and acrylic acid, and more preferably is a constituent unit derived from 2,3,3,3-tetrafluoropropene.

In the copolymer, the content of the VdF unit (A) with respect to all monomer units in the copolymer is preferably from 60 to 99.5 mol%.

When the content of the VdF unit is less than 60 mol%, peel strength as an electrode becomes weak, and when the VdF content is more than 99.5 mol%, it is difficult to uniformly coat the slurry.

In the copolymer, the content of the VdF unit with respect to all polymerization units is preferably 65 mol% or more. When this content is 65 mol% or more, the cycle characteristics of a battery using an electrode obtained from the electrode mixture of the present disclosure tend to be better. The compositional features of the copolymer can be measured using a 19F-NMR analyzer.

The content of the constituent unit (B) with respect to all polymerization units of the copolymer is preferably less than 99.5 mol%. If this content is 99.5 mol% or more, the crystallinity of the copolymer generally decreases significantly, and as a result, the swelling properties of a non-aqueous electrolytic solution tend to decrease.

The content of the constituent unit (B) is more preferably 99 mol% or less.

When the copolymer contains a monomer unit represented by formula (3) as a monomer unit other than VdF, the content of the monomer unit with respect to all monomer units is preferably from 0.0001 to 50.0 mol%, more preferably 0.01 mol% or more, and further preferably 0.10 mol% or more, and is more preferably 5.0 mol% or less, further preferably 3.0 mol% or less, and particularly preferably 1.5 mol% or less.

When the copolymer contains a monomer unit represented by formula (3) as another constituent unit, the content of that monomer can be measured by acid-base titration of the carboxylic acid groups.

When the copolymer contains a monomer unit represented by formula (3), the content of the VdF unit in the copolymer with respect to all monomer units is preferably from 50.0 to 99.999 mol%, more preferably 95.0 mol% or more, further preferably 97.0 mol% or more, and particularly preferably 98.5 mol% or more, and is more preferably 99.99 mol% or less, and further preferably 99.90 mol% or less.

In addition to the above-described monomer, to the extent that the object of the present disclosure is not impaired, the copolymer may contain a constituent unit (C) based on a fluorinated monomer such as vinyl fluoride and a fluoroalkyl vinyl ether, and a non-fluorinated monomer such as ethylene and propylene.

The fluoroalkyl vinyl ether is preferably a fluoroalkyl vinyl ether having a fluoroalkyl group having from 1 to 5 carbon atoms, and more preferably is one selected from the group consisting of perfluoro(methyl vinyl ether) (PMVE), perfluoro(ethyl vinyl ether), and perfluoro(propyl vinyl ether).

In the copolymer, the content of constituent unit (C) with respect to all monomer units is preferably from 0.0001 to 50.0 mol%, more preferably 0.01 mol% or more, and further preferably 0.10 mol% or more, and is more preferably 45.0 mol% or less, further preferably 40.0 mol% or less, and particularly preferably 35.0 mol% or less.

The weight average molecular weight (in terms of polystyrene) of the copolymer is preferably from 10,000 to 3,000,000, more preferably 30,000 or more, further preferably 50,000 or more, and particularly preferably 200,000 or more, and is more preferably 2,400,000 or less, further preferably 2,200,000 or less, and particularly preferably 2,000,000 or less.

The weight average molecular weight can be measured by gel permeation chromatography (GPC) using dimethylformamide as a solvent.

The number average molecular weight (in terms of polystyrene) of the copolymer is preferably from 7,000 to 1,500,000, more preferably 21,000 or more, and further preferably 35,000 or more, and is more preferably 1,400,000 or less, further preferably 1,200,000 or less, and particularly preferably 1,100,000 or less.

The number average molecular weight can be measured by gel permeation chromatography (GPC) using dimethylformamide as a solvent.

The copolymer containing a monomer unit represented by formula (3) is preferably, for example, a VdF/acrylic acid copolymer, a VdF/methacrylic acid copolymer, a VdF/methyl methacrylate copolymer, or the like.

The VdF/(meth)acrylic acid copolymer contains a VdF unit and a (meth)acrylic acid unit. By using a VdF/(meth)acrylic acid copolymer as the copolymer, a composition for forming an electrode can be formed very easily, and it is possible to form a coating layer that adheres extremely firmly to metal foil. The content of the (meth)acrylic acid unit with respect to all monomer units is preferably from 0.0001 to 5.0 mol%, more preferably from 0.01 to 3.0 mol%, and further preferably from 0.10 to 1.5 mol%.

The content of the VdF unit of the VdF/(meth)acrylic acid copolymer with respect to all monomer units is preferably from 95.0 to 99.9999 mol%, more preferably from 97.0 to 99.99 mol%, and further preferably from 98.5 to 99.90 mol%.

The weight average molecular weight (in terms of polystyrene) of the VdF/(meth)acrylic acid copolymer is preferably from 50,000 to 3,000,000, more preferably 80,000 or more, further preferably 100,000 or more, and particularly preferably 200,000 or more, and is more preferably 2,400,000 or less, further preferably 2,200,000 or less, and particularly preferably 2,000,000 or less.

The number average molecular weight (in terms of polystyrene) of the VdF/(meth)acrylic acid copolymer is preferably from 20,000 to 1,500,000, more preferably 40,000 or more, further preferably 70,000 or more, and particularly preferably 140,000 or more, and is more preferably 1,400,000 or less, further preferably 1,200,000 or less, and particularly preferably 1,100,000 or less.

The Mooney viscosity (ML1+10 (121°C)) of the copolymer at 121°C is preferably 2 or more, more preferably 5 or more, further preferably 10 or more, and particularly preferably 30 or more.

The Mooney viscosity is a value measured in accordance with ASTM-D1646-15 and JIS K6300-1:2013.

The copolymer can be produced by a general radical polymerization method using vinylidene fluoride (VdF), the monomer serving as the constituent unit (B), and, if necessary, other monomers other than tetrafluoroethylene. The form of polymerization may be any of bulk polymerization, solution polymerization, suspension polymerization, and emulsion polymerization, but emulsion polymerization is preferred because it is easy to implement industrially.

In the polymerization, a polymerization initiator, a chain transfer agent, a surfactant, and a solvent can be used, and conventionally known examples thereof can be used for each. In the polymerization of the copolymer, an oil-soluble radical polymerization initiator or a water-soluble radical polymerization initiator can be used as the polymerization initiator.

The oil-soluble radical polymerization initiator may be a known oil-soluble peroxide. Representative examples thereof include dialkyl peroxycarbonates such as diisopropyl peroxydicarbonate and di-sec-butyl peroxydicarbonate, peroxy esters such as t-butyl peroxyisobutyrate and t-butyl peroxypivalate, and dialkyl peroxides such as di-t-butyl peroxide, as well as di[perfluoro(or fluorochloro)acyl]peroxides of di(ω-hydro-dodecafluoroheptanoyl) peroxide, di(ω-hydro-tetradecafluoroheptanoyl) peroxide, di(ω-hydro-hexadecafluorononanoyl) peroxide, di(perfluorobutyryl) peroxide, di(perflupareryl) peroxide, di(perfluorohexanoyl) peroxide, di(perfluoroheptanoyl) peroxide, di(perfluorooctanoyl) peroxide, di(perfluorononanoyl) peroxide, di(ω-chloro-hexafluorobutyryl) peroxide, di(ω-chloro-decafluorohexanoyl) peroxide, di(ω-chloro-tetradecafluorooctanoyl) peroxide, ω-hydro-dodecafluoroheptanoyl-ω-hydrohexadecafluorononanoyl-peroxide, ω-chloro-hexafluorobutyryl-co-chloro-decafluorohexanoyl-peroxide, ω-hydrododecafluoroheptanoyl-perfluorobutyryl peroxide, di(dichloropentafluorobutanoyl) peroxide, di(trichlorooctafluorohexanoyl) peroxide, di(tetrachloroundecafluorooctanoyl) peroxide, di(pentachlorotetradecafluorodecanoyl) peroxide, and di(undecachlorodotriacontafluorodocosanoyl) peroxide.

The water-soluble radical polymerization initiator may be a known water-soluble peroxide, such as an ammonium salt, potassium salt, or sodium salt of persulfuric acid, perboric acid, perchloric acid, perphosphoric acid, percarbonate, and the like, t-butyl permaleate, t-butyl hydroperoxide, and the like. A reducing agent such as a sulfite or a sulfurous acid salt may also be included, and the amount used may be 0.1 to 20 times that of the peroxide.

The amount of the radical polymerization initiator added is not limited, and the radical polymerization initiator may be added in an amount or more that does not significantly reduce the polymerization rate (for example, several ppm to water concentration) all at once at the beginning of the polymerization, or added sequentially or continuously. The upper limit is the range at which the polymerization reaction heat can be removed from the apparatus surface.

The surfactant may be a nonionic surfactant, an anionic surfactant, a cationic surfactant, and the like. The amount added (based on the polymerizing water) is preferably from 10 to 5,000 ppm. More preferably, the amount added is from 50 to 5,000 ppm. Further, a reactive emulsifier can be used as the surfactant. The reactive emulsifier is not limited as long as it is a compound having one or more unsaturated bonds and one or more hydrophilic groups.

The solvent is preferably a solvent that does not have chain transfer properties. In the case of solution polymerization, an example includes dichloropentafluoropropane (R-225), and in the case of emulsion polymerization and suspension polymerization, examples of the solvent include water, a mixture of water and a water-soluble organic solvent, and a mixture of water and a water-insoluble organic solvent.

In the polymerization, examples of the chain transfer agent include esters such as dimethyl malonate, diethyl malonate, methyl acetate, ethyl acetate, butyl acetate, and dimethyl succinate, as well as isopentane, methane, ethane, propane, isopropanol, acetone, various mercaptans, carbon tetrachloride, cyclohexane, and the like.

Bromine or iodine compounds may be used as the chain transfer agent. Examples of the polymerization method when using a bromine compound or an iodine compound include a method of performing emulsion polymerization in an aqueous medium under pressure in the presence of a bromine compound or an iodine compound in a substantially anoxic state (iodine transfer polymerization method). Typical examples of the bromine or iodine compound to be used include compounds represented by the following formula.

R²IₓBr_{y}

In the formula, x and y are each an integer of from 0 to 2 and satisfy 1≤x+y≤2, and R² is a saturated or unsaturated fluorohydrocarbon group or chlorofluorohydrocarbon group having from 1 to 16 carbon atoms or a hydrocarbon group having from 1 to 3 carbon atoms, which optionally contains an oxygen atom.

Examples of the iodine compound include 1,3-diiodoperfluoropropane, 2-iodoperfluoropropane, 1,3-diiodo-2-chloroperfluoropropane, 1,4-diiodoperfluorobutane, 1,5-diiodo-2,4-dichloroperfluoropentane, 1,6-diiodoperfluorohexane, 1,8-diiodoperfluorooctane, 1,12-diiodoperfluorododecane, 1,16-diiodoperfluorohexadecane, diiodomethane, 1,2-diiodoethane, 1,3-diiodo-n-propane, CF₂Br₂, BrCF₂CF₂Br, CF₃CFBrCF₂Br, CFClBr₂, BrCF₂CFClBr, CFBrClCFClBr, BrCF₂CF₂CF₂Br, BrCF₂CFBrOCF₃, 1-bromo-2-iodoperfluoroethane, 1-bromo-3-iodoperfluoropropane, 1-bromo-4-iodoperfluorobutane, 2-bromo-3-iodoperfluorobutane, 3-bromo-4-iodoperfluorobutene-1,2-bromo-4-iodoperfluorobutene-1, monoiodomonobromo-substituted products, diiodomonobromo-substituted products, and (2-iodoethyl) and (2-bromoethyl) substituted products of benzene, and the like. These compounds may be used singly or in combination with each other.

Among these, 1,4-diiodoperfluorobutane, 1,6-diiodoperfluorohexane, and 2-iodoperfluoropropane are preferred from the viewpoint of polymerization reactivity, crosslinking reactivity, and ease of availability.

In the case of emulsion polymerization, the copolymer obtained by the above method can be obtained in powder form by coagulating the dispersion as polymerized, washing with water, dehydrating, and drying. The coagulation can be performed by adding an inorganic salt or acid such as aluminum sulfate, by applying a mechanical shearing force, or by freezing the dispersion. In the case of suspension polymerization, a copolymer in powder form can be obtained by recovering the dispersion as polymerized and drying it. In the case of solution polymerization, the copolymer can be obtained by directly drying a solution containing the polymer, or by adding a poor solvent dropwise for purification.

In the binder for a positive electrode, one type or two or more types of the copolymer may be used. In particular, a combination of two or more types of copolymers having different molecular structures may be used. The present disclosure also provides a binder for a positive electrode of a sodium ion battery that includes two or more types of the above-described copolymer.

The combination of copolymers is not limited and may be selected as appropriate. Among these combinations, a combination of a copolymer having, as the constituent unit (B), a constituent unit derived from the monomer represented by formula (3) and another copolymer is preferred.

When the copolymers are combined as described above, the ratio (mass ratio) of the copolymer having a constituent unit derived from the monomer represented by formula (3) as the constituent unit (B) to the other copolymers is preferably from 80:20 to 99.9:0.1.

Within this range, the effects of the present invention can be achieved.

The ratio (mass ratio) of the copolymer having a constituent unit derived from the monomer represented by formula (3) to the other copolymers is more preferably 90:10 or more, and further preferably 95:5 or more. The ratio (mass ratio) of the copolymer having a constituent unit derived from the monomer represented by formula (3) to the other copolymers is more preferably 99.5:0.5 or less, and further preferably 99:1 or less.

The binder for a positive electrode of the present disclosure may contain a blend polymer that is a combination of one or more of the above copolymers and one or more fluorine-containing polymers other than the above copolymers. The present disclosure also provides a binder for a positive electrode of a sodium ion battery that includes the above-described copolymer and a fluorine-containing polymer other than the above-described copolymer.

The fluorine-containing polymer other than the above-described copolymer is not limited, and among them, PVdF, modified PVdF, and the like is preferred.

Examples of the modified PVdF include acrylic acid-modified PVDF and the like.

In the case of combining the above-described copolymer and another fluorine-containing polymer, the ratio (mass ratio) of the copolymer to the other fluorine-containing polymer is preferably from 0.5:99.5 to 40:60. Within this range, the peel strength of the electrode can be maintained.

The ratio (mass ratio) of the above-described copolymer to the other fluorine-containing polymer is more preferably 1:90 or more. The ratio (mass ratio) of the copolymer to the other fluorine-containing polymer is more preferably 35:65 or less.

The binder for a positive electrode of a sodium ion battery of the present disclosure is preferably used in an electrode mixture for a positive electrode of a sodium ion battery. Specifically, the binder for a positive electrode of a sodium ion battery of the present disclosure can constitute an electrode mixture together with a positive electrode active material and a solvent. The present disclosure also provides an electrode mixture that includes a sodium composite oxide as a positive electrode active material and the positive electrode binder.

### (Positive electrode active material)

The positive electrode active material used in the present disclosure is not limited as long as it can electrochemically absorb and desorb sodium ions.

The positive electrode active material is not limited as long as it can electrochemically absorb and desorb alkali metal ions, but, for example, a material containing an alkali metal and at least one transition metal is preferred. Specific examples include alkali metal-containing transition metal composite oxides and alkali metal-containing transition metal phosphate compounds. Among these, particularly preferred as the positive electrode active material is an alkali metal-containing transition metal composite oxide that produces a high voltage. Examples of the alkali metal ions include lithium ions, sodium ions, potassium ions, and the like. In a preferred embodiment, the alkali metal ion may be a lithium ion or a sodium ion. That is, in that embodiment, the alkali metal ion secondary battery is a sodium ion secondary battery.

Examples of the alkali metal-containing transition metal composite oxide include:
a sodium manganese spinel composite oxide represented by

   Formula (3-1) : MₐMn_{2-b}M¹_{b}O₄
wherein M is Na, 0.9≤a, 0≤b≤1.5, and M¹ is at least one metal selected from the group consisting of Fe, Co, Ni, Cu, Zn, Al, Sn, Cr, V, Ti, Mg, Ca, Sr, B, Ga, In, Si, and Ge;
a sodium nickel composite oxide represented by

   Formula (3-2) : MNi_{1-c}M²_{c}O₂
wherein M is Na, 0≤c≤0.5, and M² is at least one metal selected from the group consisting of Fe, Co, Mn, Cu, Zn, Al, Sn, Cr, V, Ti, Mg, Ca, Sr, B, Ga, In, Si, and Ge; and
a sodium cobalt composite oxide represented by

   Formula (3-3) : MCo_{1-d}M³_{d}O₂
wherein M is Na, 0≤d≤0.5, and M³ is at least one metal selected from the group consisting of Fe, Ni, Mn, Cu, Zn, Al, Sn, Cr, V, Ti, Mg, Ca, Sr, B, Ga, In, Si, and Ge.

Among them, from the viewpoint of providing a high-energy-density and high-output secondary battery, MCoO₂, MMnO₂, MNiO₂, MMn₂O₄, MNi_{0.8}Co_{0.15}Al_{0.05}O₂, or MNi_{1/3}Co_{1/3}Mn_{1/3}O₂, and the like are preferable, and a compound represented by the following formula (3-4) is preferred.

MNiₕCoᵢMnⱼM⁵ₖO₂ (3-4)

In the formula, M is Na, M⁵ is at least one selected from the group consisting of Fe, Cu, Zn, Al, Sn, Cr, V, Ti, Mg, Ca, Sr, B, Ga, In, Si, and Ge, (h+i+j+k)=1.0, 0≤h≤1.0, 0≤i≤1.0, 0≤j≤1.5, and 0≤k≤0.2.

Examples of the alkali metal-containing transition metal phosphate compound includes compounds represented by the following formula (70).

MₑM⁴_{f}(PO₄)_{g} (70)

In the formula, M is Na, M⁴ represents at least one selected from the group consisting of V, Ti, Cr, Mn, Fe, Co, Ni, and Cu, 0.5≤e≤3, 1≤f≤2, and 1≤g≤3.

The transition metal of the sodium-containing transition metal phosphate compound is preferably V, Ti, Cr, Mn, Fe, Co, Ni, Cu, or the like, and specific examples include iron phosphates such as NaFePO₄, Na₃Fe₂(PO₄)₃, and NaFeP₂O₇, cobalt phosphates such as NaCoPO₄, and sodium transition metal phosphate compounds in which some of the main transition metal atoms are substituted with other elements such as Al, Ti, V, Cr, Mn, Fe, Co, Li, Ni, Cu, Zn, Mg, Ga, Zr, Nb, Si, or the like.

The sodium-containing transition metal phosphate compound preferably has an olivine structure.

Examples of other positive electrode active materials include MFePO₄, MNi_{0.8}Co_{0.2}O₂, M_{1.2}Fe_{0.4}Mn_{0.4}O₂, MNi_{0.5}Mn_{1.5}O₄, MV₃O₆, M₂MnO₃ (wherein M is Na), and the like. In particular, when the secondary battery is operated at a voltage exceeding 4.4 V or at a voltage of 4.6 V or higher, a positive electrode active material such as MNi_{0.5}Mn_{1.5}O₄ is preferable because its crystal structure does not collapse. Therefore, an electrochemical device such as a secondary battery using a positive electrode material including the above-described positive electrode active material is preferred because even when stored at high temperatures the residual capacity is less likely to decrease, the resistance increase rate is less likely to change, and battery performance does not deteriorate even when operated at a high voltage.

Examples of other positive electrode active materials include a solid solution material and the like with M₂MnO₃ and MM⁶O₂ (wherein M is at least one metal selected from the group consisting of Li, Na, and K, and M⁶ is a transition metal such as Co, Ni, Mn, or Fe).

The solid solution material is, for example, an alkali metal manganese oxide represented by the formula Mx[Mn(1-y)M⁷y]Oz. In this formula, M is Na, and M⁷ is composed of at least one metal element other than M and Mn, for example, includes one or more elements selected from the group consisting of Co, Ni, Fe, Ti, Mo, W, Cr, Zr, and Sn. Further, the values of x, y, and z in the formula are in the ranges of 1<x<2, 0≤y<1, and 1.5<z<3.

The positive electrode active material preferably has an average particle size of, for example, from 1 to 50 µm, and among that, from 1 to 20 µm, particularly from 3 to 7 µm. This is because if the average particle size of the positive electrode active material is too small, handling may be poor, while if the average particle size of the positive electrode active material is too large, it may be difficult to obtain a flat positive electrode active material layer. The average particle size of the positive electrode active material can be determined, for example, by measuring and averaging the particle sizes of active material carriers observed with a scanning electron microscope (SEM).

Further, the positive electrode active material having a substance having a composition different therefrom attached on the surface thereof may be used. Examples of the surface-attached substance include oxides such as aluminum oxide, silicon oxide, titanium oxide, zirconium oxide, magnesium oxide, calcium oxide, boron oxide, antimony oxide, and bismuth oxide, sulfates such as lithium sulfate, sodium sulfate, potassium sulfate, magnesium sulfate, calcium sulfate, and aluminum sulfate, carbonates such as lithium carbonate, calcium carbonate, and magnesium carbonate, carbon, and the like.

These surface-attached substances can be attached to the positive electrode active material surface by, for example, a method in which the substance is dissolved or suspended in a solvent, added by impregnating it in the positive electrode active material, and dried, a method in which a surface-attached substance precursor is dissolved or suspended in a solvent, added by impregnating it in the positive electrode active material, and then reacted by heating or the like, a method in which the substance is added to a positive electrode active material precursor and simultaneously sintered, and the like. In addition, when attaching carbon, it is also possible to use a method in which carbonaceous matter is mechanically attached later, for example, in the form of activated carbon.

The amount of the surface-attached substance that is used is, in terms of mass with respect to the positive electrode active material, as a lower limit, preferably 0.1 ppm or more, more preferably 1 ppm or more, and further preferably 10 ppm or more, and as an upper limit, preferably 20% or less, more preferably 10% or less, and further preferably 5% or less. The surface-attached substance can suppress an oxidation reaction of the electrolytic solution on the positive electrode active material surface and improve battery life, but if the amount attached is too small, these effects are not fully realized, and if the amount attached is too large, the resistance may increase due to inhibition of the ingress and egress of sodium ions.

Examples of the shape of the particles of the positive electrode active material include conventionally used shapes, such as a lump, a polyhedron, a sphere, an ellipsoid, a plate, a needle, and a column. Further, primary particles may aggregate to form secondary particles.

The tapped density of the positive electrode active material is preferably 0.5 g/cm³ or more, more preferably 0.8 g/cm³ or more, and further preferably 1.0 g/cm³ or more. If the tapped density of the positive electrode active material is below this lower limit, the amount of required dispersion medium increases, the amount of conductive material and binding agent required when forming the positive electrode active material layer increases, the filling ratio of the positive electrode active material in the positive electrode active material layer may be restricted, and the battery capacity may be restricted. By using a composite oxide powder having a high tapped density, a high-density positive electrode active material layer can be formed. In general, the larger the tapped density, the better, and there is no particular upper limit, but if the tapped density is too large, the diffusion of sodium ions using the electrolytic solution as a medium within the positive electrode active material layer becomes rate-determining, and the load characteristics may tend to deteriorate. Therefore, the upper limit is preferably 4.0 g/cm³ or less, more preferably 3.7 g/cm³ or less, and further preferably 3.5 g/cm³ or less.

In the present disclosure, the tapped density is determined as the powder filling density (tapped density) g/cm³ when from 5 to 10 g of positive electrode active material powder is placed in a 10 ml glass graduated cylinder and tapped 200 times with a stroke of approximately 20 mm.

The median diameter d50 (secondary particle size when primary particles aggregate to form a secondary particle) of the particles of the positive electrode active material is preferably 0.3 µm or more, more preferably 0.5 µm or more, further preferably 0.8 µm or more, and most preferably 1.0 µm or more, and preferably 30 µm or less, more preferably 27 µm or less, further preferably 25 µm or less, and most preferably 22 µm or less. If the median diameter d50 is below this lower limit, it may not be possible to obtain a high tapped density product, and if the median diameter d50 exceeds the upper limit, it takes time for lithium to diffuse within the particles, which may result in a decrease in battery performance or cause problems in the production of the positive electrode of the battery, that is, the active material, conductive material, binder, and the like may turn into a slurry with the solvent, causing problems such as streaks when coating it in a thin film. Here, by mixing two or more types of the positive electrode active materials having different median diameters d50, it is possible to further improve the filling properties when producing the positive electrode.

In the present disclosure, the median diameter d50 is measured by a known laser diffraction/scattering particle size distribution measuring apparatus. When using the LA-920 manufactured by HORIBA as a particle size distribution meter, an aqueous solution of 0.1% by mass sodium hexametaphosphate is used as the dispersion medium to be used during the measurement, and the measurement is carried out by setting the measurement refractive index to 1.24 after 5 minutes of ultrasonic dispersion.

When the primary particles aggregate to form secondary particles, the average primary particle size of the positive electrode active material is preferably 0.05 µm or more, more preferably 0.1 µm or more, and further preferably 0.2 µm or more, and the upper limit is preferably 5 µm or less, more preferably 4 µm or less, further preferably 3 µm or less, and most preferably 2 µm or less. If the above upper limit is exceeded, it is difficult to form spherical secondary particles, which may adversely affect powder filling properties, and the specific surface area decreases significantly, which may increase the possibility that battery performance such as output characteristics deteriorate. Meanwhile, if the average primary particle size is less than the lower limit, problems such as poor reversibility of charging and discharging may usually occur due to underdeveloped crystals.

In the present disclosure, the primary particle size is measured by observation using a scanning electron microscope (SEM). Specifically, in a photograph with a magnification of 10,000 times, the value of the longest length of the sections on the left and right boundaries of the primary particles with respect to the straight line in the horizontal direction is determined for any 50 primary particles, and the average value thereof is taken as the primary particle size.

The BET specific surface area of the positive electrode active material is preferably 0.1 m²/g or more, more preferably 0.2 m²/g or more, further preferably 0.3 m²/g or more, and the upper limit is preferably 50 m²/g or less, more preferably 40 m²/g or less, and further preferably 30 m²/g or less. If the BET specific surface area is smaller than this range, the battery performance tends to deteriorate, and if the BET specific surface area is larger, it is difficult for the tapped density to increase, which may tend to cause problems in coating properties when forming the positive electrode active material layer.

In the present disclosure, the BET specific surface area is defined as the value obtained by, using a surface area meter (for example, a fully automatic surface area measurement apparatus manufactured by Okura Riken), pre-drying a sample at 150°C for 30 minutes under a nitrogen flow, and then performing the measurement by the nitrogen adsorption BET one-point method according to a gas flow method using a nitrogen-helium mixed gas precisely adjusted so that the value of the relative pressure of nitrogen to atmospheric pressure is 0.3.

When the secondary battery of the present disclosure is used as a large sodium ion secondary battery for a hybrid automobile or a distributed power source, a high output is required, and it is preferred that the particles of the positive electrode active material are mainly secondary particles.

The particles of the positive electrode active material preferably include from 0.5 to 7.0% by volume of fine particles having an average particle size of secondary particle of 40 µm or less and an average primary particle size of 1 µm or less. By containing fine particles with an average primary particle size of 1 µm or less, the contact area with the electrolytic solution increases, so the diffusion of lithium ions between the electrode and the electrolytic solution can be made faster, and as a result the output performance of the battery can be improved.

As a method for producing the positive electrode active material, a general method for producing an inorganic compound is used. To produce a spherical or oval active material in particular, various methods are conceivable. For example, a transition metal raw material may be dissolved or pulverized and dispersed in a solvent such as water, the pH adjusted while stirring to prepare a spherical precursor, which is collected and optionally dried, the Na source such as sodium hydroxide is added, and then sintering is carried out at a high temperature to obtain the active material.

To produce the positive electrode, the above-described positive electrode active material may be used alone, or two or more types having different compositions may be used in any combination or ratio.

The type of solvent used in the electrode mixture is not limited as long as the solvent is capable of dissolving or dispersing the positive electrode active material, the binding agent, and the conductive agent and thickener used as necessary. Either an aqueous solvent or an organic solvent may be used. Examples of the aqueous solvent include water, a mixed medium of alcohol and water, and the like. Examples of the organic solvent include aliphatic hydrocarbons such as hexane; aromatic hydrocarbons such as benzene, toluene, xylene, and methylnaphthalene; heterocyclic compounds such as quinoline and pyridine; ketones such as acetone, methyl ethyl ketone, and cyclohexanone; esters such as methyl acetate and methyl acrylate; amines such as diethylenetriamine and N,N-dimethylaminopropylamine; ethers such as diethyl ether, propylene oxide, and tetrahydrofuran (THF); amides such as N-methylpyrrolidone (NMP), dimethylformamide, and dimethylacetamide; aprotic polar solvents such as hexamethylphosphalamide and dimethylsulfoxide, and the like.

As the organic solvent, a solvent represented by formula (4) can also be used.

Formula (4):

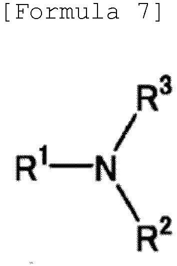

In the formula, R¹, R², and R³ are independently H or an organic group, provided that the total number of carbon atoms in R¹, R², and R³ is 6 or more, and at least one of R¹, R², and R³ is an organic group having a carbonyl group. Any two of R¹, R², and R³ may be bonded to form a ring.

The total number of carbon atoms in R¹, R², and R³ is 6 or more. That is, the types of the groups of R¹, R², and R³ are selected so that the total number of carbon atoms is 6 or more. The upper limit of the total number of carbon atoms of R¹, R², and R³ is not limited, and may be 16 or less, 14 or less, or 12 or less.

R¹, R², and R³ are independently H or an organic group. The organic group is preferably an alkyl group, an alkoxyalkyl group, an acylalkyl group, an alkenyl group, an amino group, an aminoalkyl group, or a cycloalkyl group.

At least one of R¹, R², and R³ is an organic group having a carbonyl group. As the organic group having a carbonyl group, an acyl group is preferable. As the acyl group, a group represented by the formula -CO-R⁴ (wherein R⁴ is an alkyl group having from 1 to 6 carbon atoms) is preferable. When the alkyl group has 3 or more carbon atoms, it may be linear or a branched chain. When the alkyl group of R⁴ has 2 or more carbon atoms, the alkyl group may contain a heteroatom such as an oxygen atom or a nitrogen atom or a carbonyl group between carbon-carbon atoms.

Any two of R¹, R², and R³ may be bonded to form a ring. Further, a hetero atom such as an oxygen atom may be included as a constituent atom of the ring. Preferably, the ring is a saturated ring. The number of members in the ring is not limited, but is preferably 5 or 6 members. The ring is preferably a pyrrolidine ring, an oxazoline ring, a piperidine ring, or a morpholine ring.

The solvent is preferably a solvent represented by formula (4a).

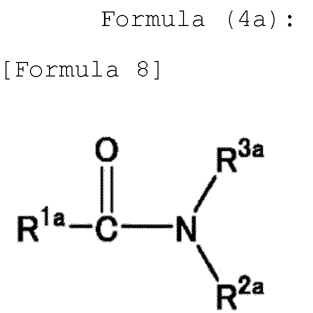

In the formula, R^{1a} is an organic group, and R^{2a} and R^{3a} are independently H or an organic group, provided that the total number of carbon atoms in R^{1a}, R^{2a}, and R^{3a} is 5 or more. Any two of R^{1a}, R^{2a}, and R^{3a} may be bonded to form a ring.

In formula (4a), the total number of carbon atoms in R^{1a}, R^{2a}, and R^{3a} is 5 or more. That is, the types of the groups of R^{1a}, R^{2a}, and R^{3a} are selected so that the total number of carbon atoms is 5 or more. The upper limit of the total number of carbon atoms in R^{1a}, R^{2a}, and R^{3a} is not limited, and may be 15 or less, 13 or less, or 11 or less.

In formula (4a), R^{1a} is an organic group. The organic group is preferably an alkyl group, an alkoxyalkyl group, an acylalkyl group, an alkenyl group, an amino group, an aminoalkyl group, or a cycloalkyl group, and more preferably an alkyl group, an alkoxyalkyl group, an acylalkyl group, an alkenyl group, an amino group, or an aminoalkyl group.

In formula (4a), R^{2a} and R^{3a} are independently H or an organic group. R^{2a} and R^{3a} are independently preferably organic groups. The organic group is preferably an alkyl group, an alkoxyalkyl group, an acylalkyl group, an alkenyl group, an amino group, an aminoalkyl group, or a cycloalkyl group, and more preferably an alkyl group, an alkoxyalkyl group, a cycloalkyl group, or an alkenyl group.

Any two of R^{1a}, R^{2a}, and R^{3a} may be bonded to form a ring. In particular, it is preferred that R^{2a} and R^{3a} combine to form a ring together with the nitrogen atom to which R^{2a} and R^{3a} are bonded. Further, a hetero atom such as an oxygen atom may be included as a constituent atom of the ring. Preferably, the ring is a saturated ring. The number of members in the ring is not limited, but is preferably 5 or 6 members. The ring is preferably a pyrrolidine ring, an oxazoline ring, a piperidine ring, or a morpholine ring.

As the solvent, at least one selected from the group consisting of solvents represented by formula (4b-1) and solvents represented by formula (4b-2) is more preferred.

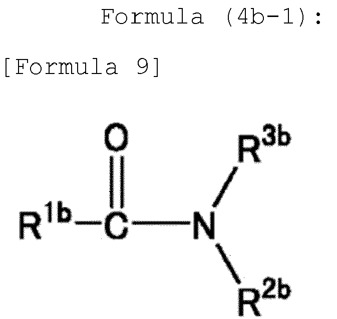

In the formula, R^{1b} is an alkyl group, an alkoxyalkyl group, an acylalkyl group, an alkenyl group, an amino group, or an aminoalkyl group, R^{2b} and R^{3b} are independently an alkyl group or an alkoxyalkyl group, and the total number of carbon atoms in R^{1b}, R^{2b}, and R^{3b} is 5 or more. R^{2b} and R^{3b} may be bonded to each other to form a ring together with the nitrogen atom to which R^{2b} and R^{3b} are bonded, and may contain an oxygen atom as a constituent atom of the ring.

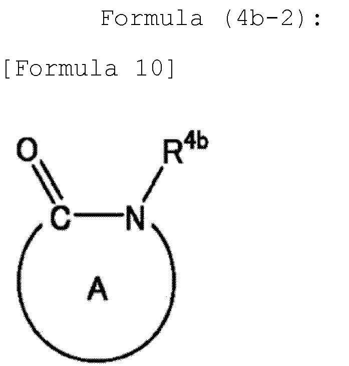

In the formula, ring A is a 5- or 6-membered amide ring, R^{4b} is an alkyl group, a cycloalkyl group, or an alkenyl group, and the total number of carbon atoms in ring A and R^{4b} is 5 or more.

In formula (4b-1), the total number of carbon atoms in R^{1b}, R^{2b}, and R^{3b} is 5 or more. That is, the types of the groups of R^{1b}, R^{2b}, and R^{3b} are selected so that the total number of carbon atoms is 5 or more. The upper limit of the total number of carbon atoms in R^{1b}, R^{2b}, and R^{3b} is not limited, and may be 15 or less, 13 or less, or 11 or less.

In formula (4b-1), R^{1b} is an alkyl group, an alkoxyalkyl group, an acylalkyl group, an alkenyl group, an amino group, or an aminoalkyl group.

The alkyl group of R^{1b} is preferably an alkyl group having from 1 to 10 carbon atoms. When the alkyl group has 3 or more carbon atoms, the alkyl group may be linear or a branched chain.

The alkoxyalkyl group of R^{1b} is preferably a group represented by the formula -R^{1b1}-O-R^{1b2} (wherein R^{1b1} is an alkylene group having from 1 to 5 carbon atoms, and R^{1b2} is an alkyl group having from 1 to 5 carbon atoms). When the alkyl group and the alkylene group have 3 or more carbon atoms, they may be linear or branched chains.

The acylalkyl group of R^{1b} is preferably a group represented by the formula -R^{1b3}-CO-R^{1b4} (wherein R^{1b3} is an alkylene group having from 1 to 5 carbon atoms, and R^{1b4} is an alkyl group having from 1 to 5 carbon atoms) is preferred. When the alkyl group and the alkylene group have 3 or more carbon atoms, they may be linear or branched chains.

The alkenyl group of R^{1b} is preferably a group represented by the formula -R^{1b5}-CR^{1b6}-=CR^{1b7} (wherein R^{1b5} is a single bond or an alkylene group having from 1 to 5 carbon atoms, and R^{1b6} and R^{1b7} are independently H or an alkyl group having from 1 to 5 carbon atoms). When the alkyl group and the alkylene group have 3 or more carbon atoms, they may be linear or branched chains. As the alkenyl group, a vinyl group is preferred.

The amino group of R^{1b} and the amino group possessed by the aminoalkyl group are monovalent functional groups obtained by removing a hydrogen from ammonia, or a primary or secondary amine. When R^{1b} is an amino group, an amide bond can be formed together with the carbonyl group to which R^{1b} is bonded.

The amino group of R^{1b} is preferably a group represented by the formula -N- (R^{1b8})₂ (wherein R^{1b8} is H or an alkyl group having from 1 to 5 carbon atoms). When the alkyl group has 3 or more carbon atoms, the alkyl group may be linear or a branched chain. As the amino group, -N-(CH₃)₂ or -N-(C₂H₅)₂ is preferred.

The aminoalkyl group of R^{1b} is preferably a group represented by the formula -R^{1b9}-N-(R^{1b8})₂ (wherein R^{1b9} is an alkylene group having from 1 to 5 carbon atoms and R^{1b8} is H or an alkyl group having from 1 to 5 carbon atoms). When the alkyl group and the alkylene group have 3 or more carbon atoms, they may be linear or branched chains.

In formula (4b-1), R^{2b} and R^{3b} are independently an alkyl group or an alkoxyalkyl group.

The alkyl group of R^{2b} and R^{3b} is preferably an alkyl group having from 1 to 10 carbon atoms. When the alkyl group has 3 or more carbon atoms, the alkyl group may be linear or a branched chain.

The alkoxyalkyl group of R^{2b} and R^{3b} is preferably a group represented by the formula -R^{2b1}-O-R^{2b2} (wherein R^{2b1} is an alkylene group having from 1 to 5 carbon atoms, and R^{2b2} is an alkyl group having from 1 to 5 carbon atoms). When the alkyl group and the alkylene group have 3 or more carbon atoms, they may be linear or branched chains.

R^{2b} and R^{3b} may be bonded to each other to form a ring together with the nitrogen atom to which R^{2b} and R^{3b} are bonded, and may contain an oxygen atom as a constituent atom of the ring. Preferably, the ring is a saturated ring. The number of members in the ring is not limited, but is preferably 5 or 6 members. The ring is preferably a pyrrolidine ring, an oxazoline ring, a piperidine ring, or a morpholine ring.

In formula (4b-2), the total number of carbon atoms in ring A and R^{4b} is 5 or more. That is, the type of the ring and the type of the group of the ring A and R^{4b} are selected so that the total number of carbon atoms is 5 or more. The upper limit of the total number of carbon atoms in ring A and R^{4b} is not limited, and may be 15 or less, 13 or less, or 11 or less.

Ring A is a 5- or 6-membered amide ring. Therefore, ring A is composed of carbon atoms, a nitrogen atom, and an alkylene group having 3 to 4 carbon atoms. The hydrogen atoms bonded to the carbon atoms of the alkylene group constituting ring A may optionally be substituted with substituents, but preferably are not substituted with substituents. Examples of the substituents include an alkyl group such as a methyl group.

R^{4b} is an alkyl group, a cycloalkyl group, or an alkenyl group.

The alkyl group of R^{4b} is preferably an alkyl group having from 1 to 10 carbon atoms. When the alkyl group has 3 or more carbon atoms, the alkyl group may be linear or a branched chain.

The cycloalkyl group of R^{4b} is preferably a cycloalkyl group having from 3 to 10 carbon atoms.

The cycloalkyl group is preferably a cyclobutyl group, a cyclopentyl group, a cyclohexyl group, a cycloheptyl group, or a cyclooctyl group.

The alkenyl group of R^{4b} is preferably a group represented by the formula -R^{4b1}-CR^{4b2}-=CR^{4b3} (wherein R^{4b1} is a single bond or an alkylene group having from 1 to 5 carbon atoms, and R^{4b2} and R^{4b3} are independently H or an alkyl group having from 1 to 5 carbon atoms). When the alkyl group and the alkylene group have 3 or more carbon atoms, they may be linear or branched chains. As the alkenyl group, a vinyl group is preferred.

The solvent is preferably at least one selected from the group consisting of 3-methoxy-N,N-dimethylpropanamide, N-ethyl-2-pyrrolidone (NEP), N-butyl-2-pyrrolidone (NBP), acryloylmorpholine, N-cyclohexyl-2-pyrrolidone, N-vinyl-2-pyrrolidone, 3-butoxy-N,N-dimethylpropanamide, N,N,N',N'-tetraethylurea, N,N-dimethylacetoacetamide, N-octyl-2-pyrrolidone, and N,N-diethylacetamide.

Among these solvents, at least one selected from the group consisting of 3-methoxy-N,N-dimethylpropanamide, N-ethyl-2-pyrrolidone, and N-butyl-2-pyrrolidone is more preferred. In particular, when an electrode mixture containing 3-methoxy-N,N-dimethylpropanamide is used as the solvent, the amount of gas generated by the resulting battery tends to be suppressed. In particular, when an electrode mixture containing N-ethyl-2-pyrrolidone (NEP) is used as the solvent, the high-temperature storage capacity retention rate of the resulting battery tends to be higher. In particular, when an electrode mixture containing N-butyl-2-pyrrolidone (NBP) is used as the solvent, it tends to be more difficult for the resistance of the resulting battery to increase.

The amount of the solvent in the electrode mixture is determined by taking into consideration the coating properties onto the current collector, the ability to form a thin film after drying, and the like. Usually, the proportion of the copolymer to the solvent is preferably from 0.5:99.5 to 20:80 in terms of mass ratio.

The electrode mixture of the present disclosure may further contain a conductive agent as necessary.

As the conductive agent, any known conductive agent can be used. Specific examples include metal materials such as copper and nickel, and carbon materials, for example, graphite such as natural graphite and artificial graphite, carbon black such as acetylene black, Ketjen black, channel black, furnace black, lamp black, and thermal black, and amorphous carbons such as needle coke, carbon nanotubes, fullerenes, and VGCF. One type of these may be used alone, or two or more types may be used together in any combination and ratio.

The conductive agent is used such that it has a content in the electrode material layer of usually 0.01% by mass or more, preferably 0.1% by mass or more, and more preferably 1% by mass or more, and usually 50% by mass or less, preferably 30% by mass or less, and more preferably 15% by mass or less. If the content is lower than this range, the electric conductivity may be insufficient. Conversely, if the content is higher than this range, the battery capacity may decrease.

The electrode mixture of the present disclosure may further contain a thickener as necessary. Examples of the thickener include carboxymethyl cellulose, methyl cellulose, hydroxymethyl cellulose, ethyl cellulose, polyvinyl alcohol, oxidized starch, phosphorylated starch, casein, polyvinylpyrrolidone, and salts thereof. One type of these may be used alone, or two or more types may be used together in any combination and ratio.

The proportion of the thickener to the active material is in the range of usually 0.1% by mass or more, preferably 0.2% by mass or more, and more preferably 0.3% by mass or more, and is in the range of usually 5% by mass or less, preferably 3% by mass or less, and more preferably 2% by mass or less. When the proportion is less than this range, coating properties may be substantially reduced. When the proportion exceeds this range, the proportion of the active material in the electrode material layer will decrease, which may cause problems such as a decrease in battery capacity and an increase in resistance between positive electrode active materials.

The electrode mixture may include materials other than those described above. However, the content proportion of such materials is preferably 8% by mass or less, and more preferably 4% by mass or less, when the entire electrode material layer is taken to be 100% by mass.

In the process of preparing the electrode mixture of the present disclosure, the above-described components are mixed to form a slurry. The mixing order of each component is not limited, and each component may be added to the solvent and mixed.

The solid content concentration in the slurry is preferably from 70 to 95% by mass. Within this range, interfacial resistance during coating can be suppressed. Further, the lower limit is preferably 73% by mass or more, and more preferably 73.5% by mass or more. The upper limit is preferably 85% by mass or less.

The electrode mixture of the present disclosure can be preferably used as an electrode material layer in the positive electrode of a sodium ion secondary battery.

An electrode that includes a current collector and an electrode material layer formed from the electrode mixture of the present disclosure on one side or both sides of the current collector is also one embodiment of the present disclosure.

The sodium ion secondary battery can have a known structure, and, representatively, includes a positive electrode and a negative electrode that can absorb and desorb sodium ions, and an electrolytic solution. A sodium ion secondary battery including the electrode of the present disclosure is also one embodiment of the present disclosure.

### <Positive electrode>

The positive electrode is preferably composed of an electrode material layer (hereinafter sometimes referred to as "positive electrode active material layer") containing the above-described positive electrode active material, and a current collector.

Examples of the material of the current collector for the positive electrode include metals such as aluminum, titanium, tantalum, stainless steel, and nickel, metal materials such as alloys thereof, and carbon materials such as carbon cloth and carbon paper. Among them, a metal material, particularly of aluminum or an alloy thereof, is preferred.

In the case of a metal material, examples of the shape of the current collector include a metal foil, a metal cylinder, a metal coil, a metal plate, expanded metal, punch metal, metal foam, and the like. For a carbon material, examples include a carbon plate, a carbon thin film, a carbon cylinder, and the like. Among these, a metal foil is preferred. The thin film may be appropriately formed into a mesh shape. The thin film may be of any thickness, but is usually 1 µm or more, preferably 3 µm or more, and more preferably 5 µm or more, and usually 1 mm or less, preferably 100 µm or less, and more preferably 50 µm or less. If the thin film is thinner than this range, it may lack the strength required as a current collector. Conversely, if the thin film is thicker than this range, handleability may be impaired.

Further, from the viewpoint of reducing the electrical contact resistance between the current collector and the positive electrode active material layer, it is preferable to coat the surface of the current collector with a conductive aid. Examples of the conductive aid include carbon and noble metals such as gold, platinum, and silver.

The ratio of the thickness of the current collector to the positive electrode active material layer is not limited, but the value of (thickness of the positive electrode active material layer on one side immediately before electrolytic solution injection)/(thickness of the current collector) is preferably 20 or lower, more preferably 15 or lower, and most preferably 10 or lower, and preferably 0.5 or higher, more preferably 0.8 or higher, and most preferably 1 or higher. If this range is exceeded, the current collector may generate heat due to Joule heat during high current density charging and discharging. If the ratio is below this range, the volume ratio of the current collector to the positive electrode active material increases, and the capacity of the battery may decrease.

The positive electrode may be manufactured by an ordinary method. For example, the above-described binding agent, thickener, conductive material, solvent, and the like may be added to the positive electrode active material to form a slurry-like electrode mixture, which is coated on the current collector, dried, and then pressed to achieve increased density.

The increase in density can be performed using a hand press, a roller press, or the like. The density of the positive electrode active material layer is preferably in the range of 1.5 g/cm³ or more, more preferably 2 g/cm³ or more, and further preferably 2.2 g/cm³ or more, and preferably 5 g/cm³ or less, more preferably 4.5 g/cm³ or less, and further preferably 4 g/cm³ or less. If the density exceeds this range, the permeability of the electrolytic solution into the vicinity of the current collector/active material interface decreases, and the charge/discharge characteristics, particularly at high current densities, deteriorates, which may prevent a high output from being obtained. Meanwhile, if the density is lower than this range, the electric conductivity between the active materials decreases and battery resistance increases, which may prevent a high output from being obtained.

Further, from the viewpoint of increasing stability at high output and high temperature, it is preferred that the area of the positive electrode active material layer be larger than the outer surface area of the battery exterior case. Specifically, it is preferred that the total electrode area of the positive electrode relative to the surface area of the exterior of the secondary battery be larger by a factor of 15 times or more, and more preferably 40 times or more in terms of area ratio. In the case of a rectangular shape with a bottom, the outer surface area of the battery exterior case refers to the total area calculated from the length, width, and thickness dimensions of the case portion filled with the power generating elements, excluding the protruding parts of the terminals. In the case of a cylindrical shape with a bottom, the exterior surface area of the battery case refers to the geometric surface area that approximates, as a cylinder, the case portion filled with the power generating elements, excluding the protruding parts of the terminal. The total electrode area of the positive electrode is the geometric surface area of the positive electrode mixture layer facing the mixture layer containing the negative electrode active material, and for a structure consisting of a positive electrode mixture layer formed on both sides via a current collector foil, refers to the sum of the areas calculated for each surface separately.

The content of the copolymer in the electrode material layer is preferably from 0.1 to 5% by mass, and more preferably from 0.5 to 3% by mass. Further, the lower limit is preferably 0.6% by mass or more, more preferably 1% by mass or more, and particularly preferably 1.1% by mass or more. The upper limit is preferably 2% by mass or less, and more preferably 1.7% by mass or less. A low content of copolymer in the electrode material matter layer may reduce the flexibility of the electrode. On the other hand, if the content is too high, battery performance may deteriorate.

When using a blend polymer that combines the above-described copolymer with one or more fluorine-containing polymers other than the above-described copolymer, the content of the blend polymer in the electrode material layer is preferably from 0.1 to 5% by mass, and more preferably from 0.5 to 3% by mass. Further, the lower limit is preferably 0.6% by mass or more, more preferably 1% by mass or more, and particularly preferably 1.1% by mass or more. The upper limit is preferably 2% by mass or less, and more preferably 1.7% by mass or less. A low content of blend polymer in the electrode material matter layer may reduce the flexibility of the electrode. On the other hand, if the content is too high, battery performance may deteriorate.

From the viewpoint of high battery capacity, the content of the positive electrode active material is preferably from 50 to 99.5% by mass, and more preferably from 80 to 99% by mass, of the electrode material layer. Further, the content of the positive electrode active material in the positive electrode active material layer is preferably 80% by mass or more, more preferably 82% by mass or more, and particularly preferably 84% by mass or more. The upper limit is preferably 99% by mass or less, and more preferably 98% by mass or less. If the content of the positive electrode active material in the electrode material matter layer is low, the electric capacity may be insufficient. Conversely, if the content is too high, the strength of the positive electrode may be insufficient.

The thickness of the positive electrode plate is not limited, but from the viewpoint of a high capacity and a high output, the thickness of the mixture layer after subtracting the thickness of the metal foil of the core material is, as the lower limit for one side of the current collector, preferably 10 µm or more, and more preferably 20 µm or more, and preferably 500 µm or less, and more preferably 450 µm or less.

The positive electrode plate may have a substance with a different composition attached to its surface. Examples of the surface-attached substance include oxides such as aluminum oxide, silicon oxide, titanium oxide, zirconium oxide, magnesium oxide, calcium oxide, boron oxide, antimony oxide, and bismuth oxide, sulfates such as lithium sulfate, sodium sulfate, potassium sulfate, magnesium sulfate, calcium sulfate, and aluminum sulfate, carbonates such as lithium carbonate, calcium carbonate, and magnesium carbonate, carbon, and the like.

### <Negative electrode>

The negative electrode is preferably composed of an electrode material layer (hereinafter sometimes referred to as "negative electrode active material layer") containing a negative electrode active material, and a current collector.

### (Negative electrode active material)

Examples of the negative electrode active material include, but are not limited to, any selected from lithium metal, carbonaceous matter materials such as artificial graphite, graphite carbon fiber, resin sintered carbon, pyrolytic vapor grown carbon, coke, mesocarbon microbeads (MCMB), furfuryl alcohol resin sintered carbon, polyacene, pitch-based carbon fiber, vapor grown carbon fiber, natural graphite, and non-graphitizing carbon, silicon-containing compounds such as silicon and silicon alloys, Li₄Ti₅O₁₂, and the like, or a mixture of two or more types of these. Among them, those at least partially including a carbonaceous matter material and silicon-containing compounds can be particularly preferably used.

The negative electrode active material used in the present disclosure preferably contains silicon as a constituent element. By including silicon as a constituent element, a high capacity battery can be produced.

The material containing silicon is preferably silicon particles, particles having a structure in which fine particles of silicon are dispersed in a silicon-based compound, silicon oxide particles represented by the formula SiOx (0.5≤x≤1.6), or mixtures thereof. By using such a material, a negative electrode mixture for a lithium ion secondary battery having higher initial charge/discharge efficiency, higher capacity, and better cycle characteristics can be obtained.

As used herein, silicon oxide is a general term for amorphous silicon oxide, and silicon oxide before disproportionation is represented by the formula SiOx (0.5≤x≤1.6). x is preferably 0.8≤x<1.6, and more preferably 0.8≤x<1.3. This silicon oxide can be obtained, for example, by cooling and precipitating silicon monoxide gas produced by heating a mixture of silicon dioxide and metal silicon.

Particles having a structure in which fine particles of silicon are dispersed in a silicon-based compound can be obtained, for example, by firing a mixture of fine particles of silicon and a silicon-based compound, or by heat treating silicon oxide particles before disproportionation represented by the formula SiOx at a temperature of 400°C or higher, preferably from 800 to 1,100°C, in an inert, non-oxidizing atmosphere such as argon to carry out a disproportionation reaction. In particular, the material obtained by the latter method is preferred because the silicon microcrystals are uniformly dispersed. As a result of the disproportionation reaction, the size of silicon nanoparticles can be adjusted to 1 to 100 nm. The silicon oxide in the particles having a structure in which silicon nanoparticles are dispersed in silicon oxide is preferably silicon dioxide. It is also noted that the fact that silicon nanoparticles (crystals) are dispersed in amorphous silicon oxide can be confirmed by a transmission electron microscope.

The physical properties of the silicon-containing particles can be appropriately selected depending on the desired composite particles. For example, the average particle size is preferably from 0.1 to 50 µm, and the lower limit is more preferably 0.2 µm or more, and further preferably 0.5 µm or more. The upper limit is more preferably 30 µm or less, and further preferably 20 µm or less. The average particle size in the present invention is expressed as a weight average particle size as determined by particle size distribution measurement using a laser diffraction method.

The BET specific surface area is preferably from 0.5 to 100 m²/g, and more preferably from 1 to 20 m²/g. If the BET specific surface area is 0.5 m²/g or more, there is no risk of a deterioration in battery characteristics due to a decrease in adhesiveness when coated on the electrode. Further, if the BET specific surface area is 100 m²/g or less, the proportion of silicon dioxide on the particle surface increases, and there is no risk of a decrease in battery capacity when used as a negative electrode material for a sodium ion secondary battery.

By covering the silicon-containing particles with carbon, electric conductivity is imparted, and battery characteristics are improved. Examples of methods for imparting electric conductivity include mixing with electrically conductive particles such as graphite, covering the surface of the silicon-containing particles with a carbon film, and combining both such methods. A method of covering with a carbon film is preferred, and a chemical vapor deposition (CVD) method is more preferred.

To increase the capacity of the obtained electrode mixture, the content of the negative electrode active material in the electrode mixture is preferably 40% by mass or more, more preferably 50% by mass or more, and particularly preferably 60% by mass or more. The upper limit is preferably 99% by mass or less, and more preferably 98% by mass or less.

### (Conductive agent)

The negative electrode active material layer may further contain a conductive agent as necessary.

As the conductive agent, any known conductive agent can be used. Specific examples include metal materials such as copper and nickel, and carbon materials, for example, graphite such as natural graphite and artificial graphite, carbon black such as acetylene black, Ketjen black, channel black, furnace black, lamp black, and thermal black, and amorphous carbons such as needle coke, carbon nanotubes, fullerenes, and VGCF. One type of these may be used alone, or two or more types may be used together in any combination and ratio.

The conductive agent is used such that it has a content in the negative electrode active material layer of usually 0.01% by mass or more, preferably 0.1% by mass or more, and more preferably 1% by mass or more, and usually 50% by mass or less, preferably 30% by mass or less, and more preferably 15% by mass or less. If the content is lower than this range, the electric conductivity may be insufficient. Conversely, if the content is higher than this range, the battery capacity may decrease.

### (Binder)

The negative electrode active material layer preferably contains a binder.

The binder is not limited, and examples include the same binders as described above as binders that can be used in the positive electrode. The proportion of the binder to the negative electrode active material is preferably 0.1% by mass or more, more preferably 0.5% by mass or more, and particularly preferably 0.6% by mass or more, and preferably 20% by mass or less, more preferably 15% by mass or less, further preferably 10% by mass or less, and particularly preferably 8% by weight or less. When the proportion of the binder to the negative electrode active material exceeds the above range, the proportion of binder of which amount of binder not contributing to the battery capacity increases, which may lead to a decrease in the battery capacity. Moreover, when the proportion is below the above range, the strength of the negative electrode may deteriorate.

In particular, when a rubbery polymer represented by SBR is contained as a main component, the proportion of the binder to the negative electrode active material is usually 0.1% by mass or more, preferably 0.5% by mass or more, and more preferably 0.6% by mass or more, and usually 5% by mass or less, preferably 3% by mass or less, and further preferably 2% by mass or less. In addition, when a fluorine-based polymer represented by polyvinylidene fluoride is contained as a main component, the proportion to the negative electrode active material is usually 1% by mass or more, preferably 2% by mass or more, and more preferably 3% by mass or more, and usually 15% by mass or less, more preferably 10% by mass or less, and further preferably 8% by mass or less.

The negative electrode active material layer may further include a thermoplastic resin. Examples of the thermoplastic resin include vinylidene fluoride, polypropylene, polyethylene, polystyrene, polyethylene terephthalate, and polyethylene oxide. One type of these may be used alone, or two or more types may be used together in any combination and ratio.

The proportion of the thermoplastic resin to the electrode active material is in the range of usually 0.01% by mass or more, preferably 0.05% by mass or more, and more preferably 0.10% by mass or more, and is in the range of usually in 3.0% by mass or less, preferably 2.5% by mass or less, and more preferably 2.0% by mass or less. By adding a thermoplastic resin, the mechanical strength of the electrode can be improved. Further, if this range is exceeded, the proportion of the electrode active material in the electrode mixture will decrease, which may cause problems such as a decrease in battery capacity and an increase in resistance between active materials.

The negative electrode active material layer may include a thickener.

Examples of the thickener include the same thickeners as described above as thickeners that can be used in the positive electrode. The proportion of the thickener to the negative electrode active material is in the range of usually 0.1% by mass or more, preferably 0.5% by mass or more, and more preferably 0.6% by mass or more, and is in the range of usually 5% by mass or less, preferably 3% by mass or less, and more preferably 2% by mass or less. When the proportion of the thickener to the negative electrode active material is less than this range, coating properties may be substantially reduced. When the proportion exceeds this range, the proportion of the negative electrode active material in the negative electrode active material layer will decrease, which may cause problems such as a decrease in battery capacity and an increase in resistance between negative electrode active materials.

### (Other components)

The negative electrode active material layer of the present disclosure may further contain other components such as a leveling agent and a reinforcing material.

The negative electrode includes a negative electrode active material layer and a current collector. The negative electrode active material layer is formed using the above-described negative electrode mixture, and may be provided on one side or both sides of the current collector.

Examples of the current collector included in the negative electrode include a metal foil or metal net of iron, stainless steel, copper, aluminum, nickel, titanium, or the like, carbon materials such as carbon cloth or carbon paper, and the like. Of these, copper foil is preferred.

In the case of a metal material, examples of the shape of the current collector include a metal foil, a metal cylinder, a metal coil, a metal plate, expanded metal, punch metal, metal foam, and the like. For a carbon material, examples include a carbon plate, a carbon thin film, a carbon cylinder, and the like. Among these, a metal foil is preferred. The thin film may be appropriately formed into a mesh shape. The thin film may be of any thickness, but is usually 1 µm or more, preferably 3 µm or more, and more preferably 5 µm or more, and usually 1 mm or less, preferably 100 µm or less, and more preferably 50 µm or less. If the thin film is thinner than this range, it may lack the strength required as a current collector. Conversely, if the thin film is thicker than this range, handleability may be impaired.

The negative electrode may be manufactured by an ordinary method. For example, a slurry-like negative electrode mixture can be prepared by mixing the binding agent and the solvent, and then further admixing the negative electrode active material and the like to the resulting mixture. The obtained negative electrode mixture is uniformly coated on a current collector such as metal foil or metal net, the coating film is then dried, optionally heat-treated, and a thin film electrode is produced by pressing the obtained dry coating film as necessary to form a thin negative electrode material layer on the current collector. Alternatively, the negative electrode mixture may be prepared by first mixing the negative electrode active material, binding agent, and the like, and then adding a solvent.

Examples of the solvent include water or an organic solvent, and an organic solvent is preferred because an organic solvent can greatly reduce the possibility of water remaining in the negative electrode material layer when the negative electrode material layer is formed using the negative electrode mixture.

Examples of the organic solvent include nitrogen-containing organic solvents such as N-methyl-2-pyrrolidone, N,N-dimethylacetamide, and dimethylformamide; ketone solvents such as acetone, methyl ethyl ketone, cyclohexanone, and methyl isobutyl ketone; ester solvents such as ethyl acetate and butyl acetate; ether solvents such as tetrahydrofuran and dioxane; β-alkoxypropionamides such as β-methoxy-N,N-dimethylpropionamide, β-n-butoxy-N,N-dimethylpropionamide, and β-n-hexyloxy-N,N-dimethylpropionamide; as well as general-purpose organic solvents with a low boiling point such as mixed solvents thereof.

As the organic solvent, the solvent represented by formula (4) may also be used.

The amount of the solvent in the negative electrode mixture is determined by taking into consideration the coating properties onto the current collector, the ability to form a thin film after drying, and the like. Usually, the proportion of the binding agent to the solvent is from 0.5:99.5 to 20:80 in terms of mass ratio.

The thickness of the negative electrode plate is designed according to the positive electrode plate that is used. The thickness is not limited, but the thickness of the mixture layer after subtracting the thickness of the metal foil of the core material is usually 15 µm or more, preferably 20 µm or more, and more preferably 30 µm or more, and usually 300 µm or less, preferably 280 µm or less, and more preferably 250 µm or less.

### (Electrolytic solution)

The non-aqueous electrolytic solution may be a solution obtained by dissolving a known electrolyte salt in a known organic solvent for dissolving the electrolyte salt.

The organic solvent for dissolving the electrolyte salt is not limited, and one or more types of known hydrocarbon solvents such as propylene carbonate, ethylene carbonate, butylene carbonate, γ-butyrolactone, 1,2-dimethoxyethane, 1,2-diethoxyethane, dimethyl carbonate, diethyl carbonate, and ethyl methyl carbonate; fluorinated solvents such as fluoroethylene carbonate, fluoroether, and fluorinated carbonate, and the like can be used.

Examples of the electrolyte salt include:
inorganic sodium salts such as NaPF₆, NaBF₄, NaClO₄, NaAlF₄, NaSbF₆, NaTaF₆, NaWF₇, NaAsF₆, NaAlCl₄, NaI, NaBr, NaCl, NaB₁₀Cl₁₀, Na₂SiF₆, Na₂PFO₃, and NaPO₂F₂;
tungsten sodium acids such as NaWOF₅;
carboxylic acid sodium salts such as HCO₂Na, CH₃CO₂Na, CH₂FCO₂Na, CHF₂CO₂Na, CF₃CO₂Na, CF₃CH₂CO₂Na, CF₃CF₂CO₂Na, CF₃CF₂CF₂CO₂Na, and CF₃CF₂CF₂CF₂CO₂Na;
sodium salts having an S=O group such as FSO₃Na, CH₃SO₃Na, CH₂FSO₃Na, CHF₂SO₃Na, CF₃SO₃Na, CF₃CF₂SO₃Na, CF₃CF₂CF₂SO₃Na, CF₃CF₂CF₂CF₂SO₃Na, sodium methyl sulfate, sodium ethyl sulfate (C₂H₅OSO₃Na), and sodium 2,2,2-trifluoroethyl sulfate;
sodium imide salts such as NaN(FCO)₂, NaN(FCO)(FSO₂), NaN(FSO₂) ₂, NaN(FSO₂)(CF₃SO₂), NaN(CF₃SO₂)₂, NaN(C₂F₅SO₂)₂, sodium bisperfluoroethanesulfonylimide, sodium cyclic 1,2-perfluoroethanedisulfonylimide, sodium cyclic 1,3-perfluoropropanedisulfonylimide, sodium cyclic 1,2-ethanedisulfonylimide, sodium cyclic 1,3-propanedisulfonylimide, sodium cyclic 1,4-perfluorobutanedisulfonylimide, and NaN(CF₃SO₂)(FSO₂), NaN(CF₃SO₂)(C₃F₇SO₂), NaN(CF₃SO₂)(C₄F₉SO₂), and NaN(POF₂)₂;
sodium methide salts such as NaC(FSO₂)₃, NaC(CF₃SO₂)₃, and NaC(C₂F₅SO₂)₃;
as well as fluorine-containing organic sodium salts such as salts represented by the formula: NaPFₐ(CₙF₂ₙ₊₁)₆₋ₐ (wherein a is an integer from 0 to 5, and n is an integer from 1 to 6) (for example, NaPF₃(C₂F₅)₃, NaPF₃(CF₃)₃, NaPF₃(iso-C₃F₇)₃, NaPF₅(iso-C₃F₇), NaPF₄(CF₃)₂, NaPF₄(C₂F₅)₂), NaPF₄(CF₃SO₂)₂, NaPF₄(C₂F₅SO₂)₂, NaBF₃CF₃, NaBF₃C₂F₅, NaBF₃C₃F₇, NaBF₂ (CF₃)₂, NaBF₂ (C₂F₅)₂, NaBF₂ (CF₃SO₂)₂, and NaBF₂ (C₂F₅SO₂)₂), NaSCN, LiB(CN)₄, NaB(C₆H₅)₄, Na₂(C₂O₄), NaP(C₂O₄)₃, and Na₂B₁₂F_{b}H_{12-b} (b is an integer from 0 to 3), and the like.

Among them, from the point of having an effect in improving output characteristics, high rate charge/discharge characteristics, high temperature storage characteristics, cycle characteristics, and the like, NaPF₆, NaBF₄, NaSbF₆, NaTaF₆, NaPO₂F₂, FSO₃Na, CF₃SO₃Na, NaN(FSO₂)₂, NaN(FSO₂)(CF₃SO₂), NaN(CF₃SO₂)₂, NaN(C₂F₅SO₂)₂, sodium cyclic 1,2-perfluoroethanedisulfonylimide, sodium cyclic 1,3-perfluoropropanedisulfonylimide, NaC(FSO₂)₃, NaC(CF₃SO₂)₃, NaC(C₂F₅SO₂)₃, NaBF₃CF₃, NaBF₃C₂F₅, NaPF₃(CF₃)₃, and NaPF₃(C₂F₅)₃ are particularly preferred, and at least one lithium salt selected from the group consisting of NaPF₆, NaN(FSO₃)₂, and NaBF₄ is most preferred.

The concentration of the electrolyte salt needs to be 0.8 mol/liter or more, and more preferably 1.0 mol/liter or more. The upper limit depends on the organic solvent for dissolving the electrolyte salt, but is usually 1.5 mol/liter.

### <Separator>

It is preferred that the secondary battery of the present disclosure further include a separator.

The material and shape of the separator are not limited as long as the separator is stable in the electrolytic solution and has excellent liquid retention properties, and known materials can be used. Among these, a separator formed from resin, glass fiber, an inorganic material, or the like, which are materials that are stable in the electrolytic solution of the present disclosure, is used, and it is preferred to use a separator that is in the form of a porous sheet or nonwoven fabric that has excellent liquid retention properties.

The material for a resin or glass fiber separator may be, for example, a polyolefin such as polyethylene or polypropylene, an aromatic polyamide, polytetrafluoroethylene, polyethersulfone, a glass filter, or the like. One type of these materials may be used alone, or two or more these types may be used together in any combination and ratio, such as a polypropylene/polyethylene two-layer film or a polypropylene/polyethylene/polypropylene three-layer film. Among these, the separator is preferably a porous sheet or nonwoven fabric made from a polyolefin, such as polyethylene or polypropylene, as a raw material, since such a separator has good electrolytic solution permeability and shut-down effect.

The separator may be of any thickness, but is usually 1 µm or more, preferably 5 µm or more, and more preferably 8 µm or more, and usually 50 µm or less, preferably 40 µm or less, and more preferably 30 µm or less. If the separator is thinner than the above range, insulation properties and mechanical strength may deteriorate. Moreover, if the thickness is thicker than the above range, not only may battery performance such as rate characteristics deteriorate, but also the energy density of the electrolytic solution battery as a whole may decrease.

Further, when using a porous material such as a porous sheet or a nonwoven fabric as a separator, the porosity of the separator is arbitrary, but is usually 20% or more, preferably 35% or more, and more preferably 45% or more, and usually 90% or less, preferably 85% or less, and more preferably 75% or less. If the porosity is lower than the above range, film resistance tends to increase and the rate characteristics tend to deteriorate. Moreover, if the porosity is higher than the above range, the mechanical strength of the separator tends to decrease and the insulation properties tend to deteriorate.

In addition, the average pore size of the separator is also arbitrary, but it is usually 0.5 µm or less, and preferably 0.2 µm or less, and usually 0.05 µm or more. If the average pore size exceeds the above range, short circuits tend to occur. Further, if the average pore size is below the above range, film resistance may increase and the rate characteristics may deteriorate.

On the other hand, as inorganic materials, for example, oxides such as alumina and silicon dioxide, nitrides such as aluminum nitride and silicon nitride, and sulfates such as barium sulfate and calcium sulfate may be used, and materials in the form of particles or fibers may be used.

The separator may be in the form of a thin film such as nonwoven fabric, woven fabric, and microporous film may be used. In the case of a thin film, it is preferred to use a thin film having a pore diameter of from 0.01 to 1 µm and a thickness of from 5 to 50 µm. Other than an independent thin film shape as described above, a separator in which a composite porous layer containing the above-described inorganic particles is formed on the surface layer of the positive electrode and/or negative electrode using a resin binding agent can be used. For example, a porous layer may be formed on both sides of the positive electrode using alumina particles having a 90% particle size of less than 1 µm and a fluororesin as a binding agent.

### <Battery design>

An electrode group may be either a laminated structure consisting of the positive electrode plate and the negative electrode plate with the separator interposed therebetween, or a structure in which the positive electrode plate and the negative electrode plate are spirally wound with the separator interposed therebetween. The proportion of the battery internal volume taken up by the volume of the electrode group (hereinafter referred to as "electrode group share") is usually 40% or more, and preferably 50% or more, and usually 90% or less, and preferably 80% or less.

When the electrode group share is below the above range, the battery capacity decreases. In addition, when the above range is exceeded, there is less void space, and so when the battery becomes hot, this causes the components to expand and the vapor pressure of the liquid component of the electrolyte to increase, resulting in an increase in internal pressure, which can cause the properties of the battery, such as charge/discharge cycle performance and high-temperature storage, to deteriorate, and furthermore, a gas release valve may be activated to release internal pressure to the outside.

The current collecting structure is not limited, but in order to more effectively improve the charge/discharge characteristics of high current density due to the electrolytic solution of the present disclosure, a structure that reduces the resistance of the wiring parts and connection parts is preferred. When the internal resistance is reduced in this way, the effect of using the electrolytic solution of the present disclosure exhibited particularly well.

When the electrode group has the above-described laminated structure, a structure in which the metal core portions of each electrode layer are bundled and welded to the terminals is preferably used. In a case where the area of one electrode is large, the internal resistance increases, and thus it is preferred to provide a plurality of terminals within the electrode to reduce resistance. When the electrode group has the above-described wound structure, internal resistance can be reduced by providing a plurality of lead structures for each positive electrode and negative electrode and bundling them into a terminal.

The material of the exterior case is not limited as long as the material is stable to the electrolytic solution used. Specifically, metals such as a nickel-plated steel plate, stainless steel, aluminum, aluminum alloys, and magnesium alloys, or laminated films (laminate film) of resin and aluminum foil may be used. From the viewpoint of weight reduction, it is preferred to use a metal such as aluminum or an aluminum alloy, or a laminate film.

For an exterior case that uses metals, examples of the structure include a hermetically sealed structure obtained by welding the metal pieces together using laser welding, resistance welding, or ultrasonic welding, and a structure obtained by caulking the metal pieces using a resin gasket. For an exterior case that uses the above-described laminate film, examples include a structure in which resin layers are heat-sealed to each other to form a hermetically sealed structure. To improve sealability, a resin different from the resin used for the laminate film may be interposed between the resin layers. In particular, when creating a sealed structure by heat-sealing a resin layer via a current collector terminal, the metal and the resin are joined, and so as the intervening resin, it is preferred to use a resin having a polar group or a modified resin having a polar group introduced.

The sodium ion secondary battery of the present disclosure may be of any shape, and examples thereof include a cylindrical shape, a square shape, a laminate shape, a coin shape, and a large size. It is noted that the shapes and configurations of the positive electrode, negative electrode, and separator can be changed in accordance with the shape of each battery.

### Examples

Next, the present disclosure will be described with reference to examples, but the present disclosure is not limited to these examples. In the following examples, "parts" and "%" represent "parts by mass" and "% by mass", respectively, unless otherwise specified.

The (co)polymers used in the Examples and Comparative Examples are shown in Table 1 below.

**[Table 1]**

| (Co)polymer | Compositional features | Composition ratio (mole ratio) | Molecular weight |
|---|---|---|---|
| 1 | VdF/HFP | 95/5 | 1,000,000 |
| 2 | VdF/CTFE | 97.6/2.4 | 800,000 |
| 3 | VdF/2,3,3,3-tetrafluoropropene | 77/23 | 480,000 |
| 4 | VdF/TrFE/CTFE | 65/28/7 | 650,000 |
| 5 | VdF/TrFE | 80/20 | 720,000 |
| 6 | VdF/AEHF-1 | 81.4/18.6 | 950,000 |
| 7 | VdF | 100 | 900,000 |
| 8 | VdF | 100 | 1,800,000 |
| 9 | VdF/acrylic acid | 99/1 | 1,000,000 |

The compositional features and molecular weight of each polymer were measured by the following methods.

### (Polymer compositional features)

The compositional features of the polymer were measured by solution NMR.
Measurement device: VNMRS400, manufactured by Varian, resonance frequency 376.04 (Sfrq), pulse width 30° (pw = 6.8)

### (Content of polar group-containing monomer units in polymer)

The content of polar group-containing monomer unit (acrylic acid units) was measured by acid-base titration of carboxyl groups. Specifically, about 0.5 g of copolymer was dissolved in acetone at a temperature of from 70 to 80°C. 5 ml of water was added dropwise under vigorous stirring to avoid coagulation of the copolymer. Titration with an aqueous NaOH solution having a concentration of 0.1 N was carried out until complete neutralization of the acidity, with a neutral transition at approximately -270 mV. From the measurement results, the amount of the polar group-containing monomer units contained in 1 g of copolymer was determined, and the content of the polar group-containing monomer units was calculated.

### (Weight average molecular weight)

The weight average molecular weight was measured by gel permeation chromatography (GPC). Using an AS-8010, a CO-8020, and a column (3 GMHHR-H columns connected in series) manufactured by Tosoh and an RID-10A manufactured by Shimadzu, the weight average molecular weight was calculated from data (reference: polystyrene) measured by flowing dimethylformamide (DMF) as a solvent at a flow rate of 1.0 ml/min.

### Examples 1 to 12 and Comparative Examples 1 and 2

### (Preparation of positive electrode mixture)

NaFeO₂ (manufactured by Kojundo Chemical Lab. Co., Ltd.) : binder : carbon black (SUPER-P Li manufactured by Imerys) were weighed so that the mass ratio was 97.00:1.50:1.50.

As the binder, the polymer shown in Table 2 was used.

The binder was dissolved in N-methyl-2-pyrrolidone (NMP) to a concentration of 8% by mass, then predetermined amounts of NaFeO₂ and carbon black were added to the resulting NMP solution, the mixture was stirred at 100 rpm for 60 minutes using a stirrer (T.K. HIVIS MIX, manufactured by Primix), and then stirred for a further 30 minutes at 100 rpm while carrying out vacuum defoaming. The stirred slurry was filtered using a Ni mesh (200 mesh) to obtain a uniform particle size in the solid content, thereby obtaining a positive electrode mixture.

### (Preparation of positive electrode having positive electrode material layer)

The obtained positive electrode mixture was evenly coated on one side of a positive electrode current collector (aluminum foil having a thickness of 20 µm) so that the coating amount was 22.5 mg/cm², the NMP was completely volatilized, and then a pressure of 10 t was applied using a roll press to produce a positive electrode including a positive electrode material layer and a positive electrode current collector.

### (Preparation of electrolytic solution)

NaPF₆ was dissolved in an electrolytic solution (a solvent of ethylene carbonate (EC) and ethyl methyl carbonate (EMC) in a volume ratio of 3/7) at a concentration of 1 mol/liter.

### (Production of negative electrode)

Styrene-butadiene rubber and carboxymethyl cellulose dispersed in distilled water were added to hard carbon so that the solid content of each was 1.2% by mass, the mixture was mixed with a disperser to form a slurry, the obtained slurry was uniformly coated on a negative electrode current collector (10 µm-thick copper foil), dried to form a negative electrode mixture layer, and then compression molded using a roller press to produce a negative electrode.

### (Production of sodium ion secondary battery)

The strip-shaped positive electrode was cut to 40 mm × 72 mm (with a 10 mm × 10 mm positive electrode terminal), the strip-shaped negative electrode was cut to 43 mm × 75 mm (with a 10 mm × 10 mm negative electrode terminal), and a lead body was welded to each terminal. Further, a 20 µm-thick microporous polyethylene film was cut into a size of 78 mm × 46 mm to use as a separator, the positive electrode and the negative electrode were set so as to sandwich the separator, and these components were placed in an aluminum laminate packaging material. Next, 2 ml of the electrolytic solution was placed in each portion of the packaging material, which was then sealed to produce a laminate cell.

The evaluation results are shown in Table 2.

### [Measurement of electrode water content]

In the produced electrode, the electrode water content (ppm) was measured by using the Karl Fischer method to calculate the content of physically adsorbed water in the mixture layer of the electrode (positive electrode) after the heat drying process at 150°C.

### [Measurement of interfacial resistance]

The interfacial resistance (Ωcm²) of the positive electrode was measured in a 25°C environment using an electrode resistance measurement system (HIOKI RM2610).

### [Measurement of initial impedance]

The laminated battery produced above was charged at constant current (0.2 C) / constant voltage (4.1 V) in a temperature environment of 25°C, and then discharged at 0.2 C until the discharge end voltage was 3.2 V. After performing the charge/discharge cycle three times, the voltage drop when discharging at 0.5 C, 1 C, 2 C, and 5 C at a charging rate (SOC) of 100% (the voltage drop value 15 seconds after the start of discharge) was measured, and the initial impedance (Ω) was determined from each current value and each voltage drop value.

### [Measurement of initial discharge capacity]

The above battery was charged at a constant current/constant voltage (0.1 C cut) to 4.1 V at a current equivalent to 0.2 C at 25°C, and then discharged to 3.2 V at a constant current of 0.2 C, and this cycle was repeated three cycles. The discharge capacity of the third cycle was taken as the initial discharge capacity (mAh/g).

### [Measurement of cycle retention rate]

The above cycle was repeated 300 times, and the discharge capacity was measured. The ratio of the discharge capacity after 300 cycles to the initial discharge capacity was determined, and this was taken as the cycle retention rate (%).

**[Table 2]**

| | | | Examples | | | | | | | | | | | | Comparative Examples | |
|---|---|---|---|---|---|---|---|---|---|---|---|---|---|---|---|---|
| | (Co)polymer | | 1 | 2 | 3 | 4 | 5 | 6 | 7 | 8 | 9 | 10 | 11 | 12 | 1 | 2 |
| Binder | 1 | (g) | 1.50 | | | | | | | | | | | | | |
| | 2 | (g) | | 1.50 | | | | | | | | | | | | |
| | 3 | (g) | | | 1.50 | | | | | 0.30 | 0.30 | 0.30 | 0.10 | 0.50 | | |
| | 4 | (g) | | | | 1.50 | | | | | | | | | | |
| | 5 | (g) | | | | | 1.50 | | | | | | | | | |
| | 6 | (g) | | | | | | 1.50 | | | | | | | | |
| | 7 | (g) | | | | | | | | 1.20 | | | 1.40 | 1.00 | 1.50 | |
| | 8 | (g) | | | | | | | | | 1.20 | | | | | 1.50 |
| | 9 | (g) | | | | | | | 1.50 | | | 1.20 | | | | |
| Positive electrode active material | NaFeO₂ | (g) | 97.00 | 97.00 | 97.00 | 97.00 | 97.00 | 97.00 | 97.00 | 97.00 | 97.00 | 97.00 | 97.00 | 97.00 | 97.00 | 97.00 |
| Conductive agent | SP | (g) | 1.50 | 1.50 | 1.50 | 1.50 | 1.50 | 1.50 | 1.50 | 1.50 | 1.50 | 1.50 | 1.50 | 1.50 | 1.50 | 1.50 |
| Solid content concentration | | (wt%) | 74.0 | 74.0 | 74.0 | 74.0 | 74.0 | 74.0 | 74.0 | 74.0 | 74.0 | 74.0 | 74.00 | 74.00 | 74.00 | 74.00 |
| Electrode water content | | ppm | 310 | 361 | 320 | 329 | 345 | 350 | 387 | 412 | 512 | 540 | | | >700 | >700 |
| Interfacial resistance | | (Ωcm²) | 0.29 | 0.31 | 0.23 | 0.31 | 0.32 | 0.29 | 0.5 | 0.33 | 0.35 | 0.44 | 0.36 | 0.30 | 5.10 | 5.50 |
| Initial impedance | | (Ω) | 4.1 | 4.4 | 4.2 | 4.7 | 4.8 | 4.6 | 4.9 | 4.7 | 4.8 | 4.9 | 5.10 | 4.50 | 6.20 | 6.30 |
| Initial discharge capacity | | (mAh/g) | 98 | 97 | 97 | 98 | 97 | 97 | 99 | 97 | 97 | 97 | 97 | 98 | 94 | 95 |
| Cycle retention rate(25°C 300cyc) | | (%) | 94 | 93 | 95 | 97 | 95 | 96 | 93 | 94 | 93 | 94 | 93 | 95 | 90 | 89 |

The results in Table 2 show that the sodium ion secondary battery of the Examples, which used the binder of the present disclosure, had low interfacial resistance and low initial internal resistance.

### Industrial Applicability

The binder of the present disclosure is suitable for a sodium ion battery that can be used as a power source for various devices, such as a power source for mobile phones or a power source for automobiles.

## Claims

1. A binder for a positive electrode of a sodium ion battery, comprising a copolymer that has a vinylidene fluoride unit (A) and a constituent unit (B) derived from at least one monomer selected from the group consisting of trifluoroethylene, hexafluoropropylene, chlorotrifluoroethylene, a monomer represented by formula (1), a monomer represented by formula (2), and a monomer represented by formula (3), and that is free of a tetrafluoroethylene unit: 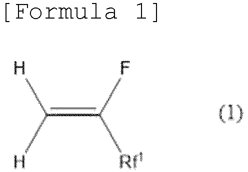 wherein Rf¹ is a linear or branched fluorinated alkyl group or fluorinated alkoxy group having from 1 to 12 carbon atoms, and the fluorinated alkyl group and the fluorinated alkoxy group optionally contain an oxygen atom (-O-) between carbon-carbon atoms in the case of having 2 or more carbon atoms, 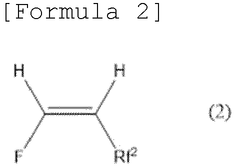 wherein Rf² is a linear or branched fluorinated alkyl group or fluorinated alkoxy group having from 1 to 12 carbon atoms, and the fluorinated alkyl group and the fluorinated alkoxy group optionally contain an oxygen atom (-O-) between carbon-carbon atoms in the case of having 2 or more carbon atoms, and 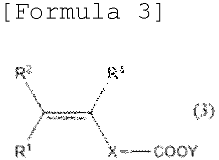 wherein R¹, R², and R³ are each independently a hydrogen atom, a chlorine atom or an alkyl group having from 1 to 5 carbon atoms; X is a single bond or an atomic group having a main chain composed of from 1 to 20 atoms and having a molecular weight of 500 or less; and Y represents an inorganic cation and/or an organic cation.

2. The binder for a positive electrode of a sodium ion battery according to claim 1, wherein a content of the vinylidene fluoride unit (A) with respect to all monomer units in the copolymer is from 60 to 99.5 mol%.

3. The binder for a positive electrode of a sodium ion battery according to claim 1 or 2, wherein the constituent unit (B) is a constituent unit derived from at least one monomer selected from the group consisting of trifluoroethylene, hexafluoropropylene, chlorotrifluoroethylene, 2,3,3,3-tetrafluoropropene, perfluoro-(2,9,9-trihaloid-5-trifluoromethyl-3,6-dioxa-8-heptene), and acrylic acid.

4. The binder for a positive electrode of a sodium ion battery according to claim 3, wherein the constituent unit (B) is a constituent unit derived from 2,3,3,3-tetrafluoropropene.

5. The binder for a positive electrode of a sodium ion battery according to any one of claims 1 to 4, comprising two or more types of the copolymer.

6. The binder for a positive electrode of a sodium ion battery according to any one of claims 1 to 5, further comprising a fluorine-containing polymer other than the copolymer.

7. The binder for a positive electrode of a sodium ion battery according to claim 6, wherein the fluorine-containing polymer is polyvinylidene fluoride or modified polyvinylidene fluoride.

8. An electrode mixture comprising
an electrode active material containing a sodium composite oxide, and the binder for a positive electrode of a sodium ion battery according to any one of claims 1 to 7.

9. An electrode comprising a current collector and an electrode material layer formed from the electrode mixture according to claim 8 provided on one side or both sides of the current collector.

10. A sodium ion secondary battery comprising the electrode according to claim 9.
